(19) Europäisches Patentamt
European Patent Office
Office européen des brevets

(11) EP 1 393 285 B1

(12) FASCICULE DE BREVET EUROPEEN

(45) Date de publication et mention de la délivrance du brevet:
**17.08.2005 Bulletin 2005/33**

(21) Numéro de dépôt: **02745482.6**

(22) Date de dépôt: **04.06.2002**

(51) Int Cl.$^7$: **G08G 5/00**, B64D 39/00

(86) Numéro de dépôt international:
**PCT/FR2002/001893**

(87) Numéro de publication internationale:
**WO 2002/101685 (19.12.2002 Gazette 2002/51)**

# (54) PROCEDE DE GESTION DU RAVITAILLEMENT EN VOL D'UNE FLOTILLE D'AERONEFS

VERFAHREN ZUR TREIBSTOFFAUFNAHME FÜR EINE FLUGZEUGFLOTTE

METHOD FOR MANAGING IN-FLIGHT REFUELLING OF A FLEET OF AIRCRAFT

(84) Etats contractants désignés:
**DE ES FR GB**

(30) Priorité: **08.06.2001 FR 0107530**

(43) Date de publication de la demande:
**03.03.2004 Bulletin 2004/10**

(73) Titulaire: **Thales**
**75008 Paris (FR)**

(72) Inventeurs:
- **SCHNEIDER, Catherine,**
**Thales Intellectual Property**
**94117 Arcueil Cedex (FR)**
- **MORIN, Dominique, Thales Intellectual Property**
**94117 Arcueil Cedex (FR)**

(74) Mandataire: **Beylot, Jacques**
**THALES Intellectual Property,**
**31-33 Avenue Aristide Briand**
**94117 Arcueil Cédex (FR)**

(56) Documents cités:
**WO-A-01/02875**
**DE-A- 3 202 138**
**US-A- 4 763 861**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne le ravitaillement en vol d'une flottille d'aéronefs et plus précisément la détermination de la séquence de ravitaillement la mieux adaptée à la situation du moment. Le ravitaillement en vol d'une flotille d'aéronefs est décrit p.ex. dans le document WO-A-01/02875.

Le contexte stratégique actuel amène de plus en plus souvent les flottilles d'aéronefs à intervenir loin de leur base ou pour des missions de durée relativement importante nécessitant un ou plusieurs ravitaillements en vol. Un ravitaillement en vol d'une flottille d'aéronefs nécessite l'organisation d'un rendez-vous entre la flottille d'aéronefs à ravitailler et l'aéronef ravitailleur et la détermination d'une séquence de ravitaillement, lorsque les aéronefs à ravitailler sont plus nombreux que les perches de ravitaillement dont dispose l'aéronef ravitailleur.

Pour son ravitaillement effectif, un aéronef doit approcher de très près, sur l'arrière, l'aéronef ravitailleur, pénétrer dans son sillage au point d'en subir les turbulences, se saisir d'une perche de ravitaillement et y rester accroché le temps du transfert de la quantité de carburant voulue tout en continuant à subir les turbulences de l'aéronef ravitailleur qui rendent le pilotage délicat et qui font qu'un ravitaillement en cours peut être interrompu prématurément à tout instant.

La détermination d'une séquence de ravitaillement, lorsque les aéronefs d'une flottille doivent se ravitailler l'un à la suite de l'autre à une même perche de ravitaillement, pose les problèmes de l'ordre de présentation des aéronefs à la perche de ravitaillement et du nombre de passages à la perche de ravitaillement de chaque aéronef de la flottille pour avoir la quantité de carburant désirée. Ces problèmes doivent être résolus de manière à optimiser, à tout instant, l'opération de ravitaillement en vol, c'est-à-dire à faire en sorte que la capacité opérationnelle de la flottille soit maximale si l'opération de ravitaillement en vol doit être interrompue prématurément pour une raison quelconque, et à minimiser le nombre de passages des aéronefs à la perche de ravitaillement puisque chaque passage est une opération délicate et coûteuse en temps de manoeuvre.

L'optimisation, à tout instant, d'une opération de ravitaillement en vol d'une flottille d'aéronefs, à partir d'une même perche de ravitaillement, se fait, en règle générale, en organisant une file d'attente ordonnée selon des besoins en pétrole décroissants. En effet, une flottille d'aéronefs est en générale constituée d'aéronefs de caractéristiques comparables ayant des réserves et des consommations de carburant du même ordre de sorte que les autonomies des aéronefs qui la composent, sont, la plupart du temps, sont inversement proportionnelles à leurs demandes en carburant.

Il est préférable de ravitailler un aéronef en un seul passage à la perche de ravitaillement mais cela n'est pas toujours possible car il faut tenir compte des autonomies des autres aéronefs de la flottille. En effet, pour une meilleure efficacité du ravitaillement en vol d'une flottille d'aéronefs, il y a intérêt à prévoir le point de rendez-vous de la flottille d'aéronefs avec l'aéronef ravitailleur le plus tard possible, en cherchant à approcher, sans les entamer, les réserves de carburant de sécurité des aéronefs ravitaillés, réserves qui doivent leur permettre, en toutes circonstances, d'atteindre un terrain de déroutement dans des conditions de sécurité acceptables. Or, il peut arriver, en fonction des conditions opérationnelles, que le rendez-vous de ravitaillement en vol soit plus tardif que prévu et que certains aéronefs de la flottille ne puisserit plus attendre, pour être ravitaillés, le temps nécessaire aux ravitaillements en un seul passage, des aéronefs qui les précèdent dans la file d'attente de ravitaillement. Deux solutions se présentent alors, soit dérouter les aéronefs qui ne peuvent plus attendre vers un terrain de déroutement sans procéder à leur ravitaillement en vol mais la flottille est désorganisée et sa mission souvent compromise, soit abréger les ravitaillements des aéronefs précédant un aéronef qui ne peut pas attendre son tour pour essayer de parvenir à ce qu'il soit ravitaillé dans les temps, avant d'entamer sa réserve de sécurité. A la condition que les aéronefs dont le ravitaillement a été abrégé aient reçu une quantité suffisante de carburant pour leur permettre d'attendre, ils peuvent compléter leur ravitaillement par un nouveau passage à la perche de ravitaillement en se replaçant en fin de la file d'attente.

Pour un ravitaillement en vol d'une flottille d'aéronefs à partir une même perche de ravitaillement d'un aéronef ravitailleur, il faut donc prévoir, en plus du point de rendez-vous avec l'aéronef ravitailleur, l'ordre des aéronefs à ravitailler dans la file d'attente de ravitaillement, le nombre de passages des aéronefs à la perche de ravitaillement, préférablement un mais possiblement deux, et les quantités de carburant délivrées aux différents passages. Cela conduit à un nombre important de possibilités pour le ravitaillement en vol d'une flottille, surtout dès qu'elle renferme trois ou quatre aéronefs.

Actuellement, l'organisation d'un ravitaillement en vol d'une flottille d'aéronefs est sous la responsabilité d'un chef de ravitaillement placé à bord de l'aéronef ravitailleur, qui décide du déroulement d'un ravitaillement, ordre des aéronefs à ravitaillés dans la file d'attente de ravitaillement, nombre de passage à la perche de ravitaillement et quantités de carburant délivrées à chaque passage, en fonction des desiderata du chef de la flottille et de son expérience personnelle. Il a la plus grande difficulté à trouver la solution la plus optimale pour la poursuite de la mission de la flottille, à chaque fois que les délais sont tendus par rapport aux réserves de sécurité d'un ou plusieurs aéronefs de la flottille. De plus, cela se traduit, pour un pilote ravitaillé et également pour le chef de la flottille par la nécessité d'assumer, au cours d'une phase de ravitaillement, une tâche de surveillance et de planification en sus d'un pilotage déjà délicat.

Il importe donc de faciliter l'organisation des ravitaillements en vol d'une flottille d'aéronefs qu'elle soit en mission sur zone ou en convoyage.

La présente invention a pour but un procédé de gestion du ravitaillement en vol d'une flottille d'aéronefs qui soit automatisable, c'est-à-dire susceptible d'être mis en oeuvre par un calculateur, et qui permette d'élaborer une proposition de séquence optimale de ravitaillement, s'il en existe, minimisant le nombre de passages, c'est-à-dire d'opérations d'accrochage à la perche de ravitaillement de l'aéronef ravitailleur aussi bien du point de vue global de la flottille que du point de vue de chacun des aéronefs qui la compose tout en assurant aux aéronefs de la flottille la disposition, en fin de l'opération de ravitaillement, des quantités de carburant demandées, cela à partir de la connaissance du point de rendez-vous de ravitaillement, du nombre d'aéronefs de la flottille, des quantités de carburant désirées par les aéronefs de la flottille en fin de ravitaillement et des distances, par rapport au point de rendez-vous de ravitaillement, sur la route suivie par l'aéronef ravitailleur, des points limites atteignables par les différents aéronefs de la flottille sans ravitaillement et sans qu'ils puisent dans leurs réserves de sécurité de carburant.

Elle a également pour but un procédé de gestion du type précité, permettant d'élaborer une séquence de ravitaillement telle qu'au cours de son déroulement, la capacité opérationnelle de la flottille soit portée au maximum possible tout au long des opérations de ravitaillement.

Elle a pour objet un procédé de gestion du ravitaillement en vol d'une flottille de n aéronefs A1,...., An à partir d'une même perche de ravitaillement d'un aéronef ravitailleur permettant élaboration d'une séquence de ravitaillement à partir de la prise en compte d'un point de rendez-vous de ravitaillement P, du nombre n d'aéronefs de la flottille, des quantités de carburant Q1,...,Qn désirées par les aéronefs A1,....,An de la flottille en fin de ravitaillement et des distances maxima L1,...,Ln franchissables par chaque aéronef de la flottille dans l'attente d'un début de ravitaillement, ces distances maxima L1,..., Ln correspondant aux distances séparant le point de rendez-vous de ravitaillement P, sur la route suivie par l'aéronef ravitailleur, des points limites atteignables par les différents aéronefs de la flottille sans ravitaillement et sans qu'ils puisent dans leurs réserves de sécurité de carburant. Ce procédé est remarquable en ce qu'il comporte les étapes suivantes :

- prise en compte initiale d'une séquence arbitraire de ravitaillement définie par une mise en file d'attente des aéronefs de la flottille selon un ordre arbitraire A1,..., An et un unique passage de chaque aéronef de la flottille à la perche de ravitaillement,
- test de viabilité de la séquence de ravitaillement prise en compte consistant à exprimer, en distances D1,..., Dn à parcourir par l'aéronef ravitailleur, les temps nécessaires pour délivrer aux aéronefs de la flottille les quantités de carburant prévues lors de leurs passages à la perche de ravitaillement et à vérifier, en descendant la file d'attente, que chaque aéronef An,...., A1 entamera son ravitaillement dans les délais, c'est-à-dire avant que l'aéronef ravitailleur n'ait parcouru une distance supérieure à la distance maximum franchissable Ln,..., L1 par l'aéronef considéré,
- en l'absence de constat d'aéronef entamant son ravitaillement hors délai, admettre la viabilité de la séquence de ravitaillement testée et l'adopter,
- en présence d'un constat d'aéronef entamant son ravitaillement hors délai, modifier la séquence de ravitaillement testée pour écourter l'attente de cet aéronef et tenter de le faire se ravitailler dans les délais, la modification de la séquence consistant à fractionner en deux passages, le ou les ravitaillements d'un ou plusieurs aéronefs qui précèdent dans la file d'attente l'aéronef concerné, un premier passage écourté à la perche de ravitaillement permettant à un aéronef de recevoir une quantité minimum de carburant augmentant suffisamment son autonomie pour qu'il puisse se replacer en fin de la file d'attente et attendre un deuxième passage à la perche de ravitaillement sans puiser dans sa réserve de carburant de sécurité, le ou les aéronefs dont le ravitaillement est fractionné en deux étant choisis de manière à minimiser le nombre de passages à la perche de ravitaillement, le choix portant d'abord sur l'aéronef, s'il existe, qui est placé en amont dans la file d'attente et dont le fractionnement du ravitaillement en deux passages à la perche de ravitaillement permet d'approcher au mieux, par valeur supérieure, le gain de temps recherché, puis sur deux aéronefs, s'ils existent, placés en amont dans la file d'attente dont les fractionnements des ravitaillements permettent d'approcher au mieux, par valeur supérieure le gain de temps recherché et ainsi de suite, une absence de solution dans le choix des aéronefs à ravitaillement fractionné conduisant à un constat d'impossibilité de ravitaillement de la flottille complète, tandis qu'une présence de solution conduit à une proposition de séquence de ravitaillement modifiée, et
- prendre en compte toute proposition de séquence de ravitaillement modifiée et tester sa viabilité en repartant à la deuxième étape du procédé.

Avantageusement, en cas de test de viabilité négatif de la séquence de ravitaillement arbitraire prise en compte initialement, celle-ci est remplacée par une séquence de ravitaillement dite nominale définie par une mise en file d'attente des aéronefs de la flottille selon un ordre correspondant à des quantités décroissantes de carburant demandées et par un unique passage de chaque aéronef de la flottille à la perche de ravitaillement, le premier aéronef de la file étant celui ayant demandé la quantité de carburant la plus importante.

Avantageusement, en cas de test de viabilité négatif de la séquence de ravitaillement arbitraire prise en compte initialement, celle-ci est remplacée par une séquence de ravitaillement définie par une mise en file d'attente des aéronefs de la flottille selon un ordre correspondant à des distances maxima franchissables L1, L2,...,Ln croissantes, le premier aéronef de la flottille étant celui pouvant franchir la distance maximum la plus faible.

Avantageusement, en cas d'un test négatif de viabilité d'une séquence de ravitaillement dû au constat d'un aéronef de la flottille entamant son ravitaillement hors délai, le choix du ou des aéronefs placés en amont dans la file d'attente dont le ravitaillement est fractionné, résulte d'essais virtuels systématiques pratiqués en remontant la file d'attente en prenant en compte un aéronef, puis deux dont celui procurant le gain de temps le plus important, puis trois dont les deux procurant le gain de temps le plus important et ainsi de suite.

Avantageusement, la durée du premier passage écourté à la perche de ravitaillement, d'un ravitaillement fractionné est fixée à une même valeur DMIN pour tous les aéronefs de la flottille, durée qui est progressivement augmentée, une fois que la séquence de ravitaillement considérée a satisfait au test de viabilité, jusqu'à parvenir en limite d'autonomie pour l'un des aéronefs de la flottille.

Avantageusement, le choix des aéronefs de la flottille dont le ravitaillement est fractionné résulte de la vérification du respect d'une succession de relations d'inégalité entre les distances de parcours D1,..., Dn nécessaires à l'aéronef ravitailleur pour délivrer les quantités de carburant demandées au cours de chaque passage des aéronefs de la flottille à la perche de ravitaillement et les distances maxima franchissables par chaque aéronef de la flottille.

D'autres caractéristiques et avantages de l'invention ressortiront de la description ci-après d'un mode de réalisation donné à titre d'exemple. Cette description sera faite en regard du dessin dans lequel :

- une figure 1 est un schéma illustrant les conditions opérationnelles d'une séquence de ravitaillement d'une flottille d'aéronefs en mission de surveillance,
- une figure 2 est un schéma montrant les différentes possibilités de rejointe de l'aéronef ravitailleur par la flottille d'aéronefs à ravitailler en fonction du respect du point de rendez-vous,
- une figure 3 est un schéma illustrant le déroulement d'un ravitaillement sur axe (cas d'un vol de convoyage par exemple),
- une figure 4 est un schéma illustrant le problème posé par la limite d'autonomie d'un aéronef à ravitailler,
- une figure 5 est un tableau résumant les différentes séquences de ravitaillement proposées en fonction des divers problèmes d'autonomie qui peuvent se poser dans le cadre d'une flottille de deux aéronefs,
- une figure 6 est un tableau résumant les différentes séquences de ravitaillement proposées en fonction des divers problèmes d'autonomie qui peuvent se poser dans le cadre d'une flottille de trois aéronefs, et
- des figures 7a et 7b sont des tableaux résumant les différentes séquences de ravitaillements proposées en fonction des divers problèmes d'autonomie qui peuvent se poser dans le cadre d'une flottille de quatre aéronefs.

Pendant une mission de surveillance lointaine nécessitant un ou plusieurs ravitaillements en vol, une flottille 1 d'aéronefs suit, au-dessus de la zone surveillée, un parcours 10 qui a été prédéfini en temps et en lieu au cours de la préparation de mission. Ce parcours souvent bouclé est représenté sur la figure 1 par un hippodrome 10 dit de surveillance. Les ravitaillements de la flottille 1 d'aéronefs sont assurés par un aéronef ravitailleur 2 évoluant dans une zone de sécurité aussi proche que possible de la zone de surveillance.

Au cours des ravitaillements, les aéronefs de la flottille 1 doivent manoeuvrer pour saisir une perche de ravitaillement traînée par l'aéronef ravitailleur 2 et y rester accrochés le temps du transfert du carburant. Ces manoeuvres étant délicates, elles se font alors que les aéronefs volent en ligne droite. Pour ce faire, lorsque l'aéronef ravitailleur 2 décrit un parcours bouclé en vue de rester dans une zone de sécurité proche de la zone de surveillance, il décrit souvent une boucle aplatie 20 présentant deux branches rectilignes aller et retour, propices aux opérations de ravitaillement. Cette boucle aplatie 20 est également représentée sous forme d'un hippodrome.

Les positions en temps et en lieu de la flottille 1 d'aéronefs sur l'hippodrome de surveillance 10 et de celle de l'aéronef ravitailleur 2 sur l'hippodrome de ravitaillement 20 ayant été prévues lors de la préparation de la mission, il faut optimiser le point 11 et le moment où la flottille 1 d'aéronefs quitte l'hippodrome de surveillance 10 en direction de l'aéronef ravitailleur 2 pour que les aéronefs de la flottille 1 puissent rester un maximum de temps sur la zone de surveillance. Cette optimisation peut se faire, soit en fonction d'une heure convenue lors de la préparation de mission ou en cours de mission pour le rendez-vous avec l'aéronef ravitailleur 2, soit en fonction des autonomies des aéronefs de la flottille 1 qui déterminent le point limite au-delà duquel la flottille 1 doit arrêter sa mission de surveillance pour se ravitailler. Elle implique, outre la détermination du point 11 et du moment de départ de la flottille 1 d'aéronefs vers l'aéronef ravitailleur 2, les déterminations d'un point 21 et d'un moment de rendez-vous avec l'aéronef ravitailleur 2 sur l'hippodrome de ravitaillement 20, d'une trajectoire de rejointe 22, de terrains d'atterrissage de déroutement et de points et de trajectoires limites de déroutement pour chaque aéronef de la flottille tenant compte de leurs autonomies avant ravitaillement.

Du point de vue pratique, il peut y avoir un écart de temps sur le rendez-vous effectif dû soit à l'aéronef ravitailleur, soit à la flottille d'aéronefs ravitaillés de sorte que le rendez-vous peut se faire en avance, comme représenté en II sur la figure 2, ou en retard, comme représenté en III sur la figure 2, ce qui implique de réactualiser périodiquement le point et le moment du rendez-vous, la trajectoire de rejointe, les terrains d'atterrissage de déroutement et les points et trajectoires limites de déroutement des différents aéronefs de la flottille.

Au cours d'un ravitaillement de la flottille 1 d'aéronef à une unique perche de ravitaillement, les aéronefs de la flottille 1 doivent constituer une file d'attente pour se saisir, chacun à leur tour de la perche de ravitaillement. La figure 3 montre le déroulement d'une procédure de ravitaillement au cours de laquelle l'aéronef ravitailleur 2 et la flottille 1 d'aéronefs volent en ligne, un premier aéronef de la flottille se saisissant de la perche de ravitaillement sur une durée DEB• 1 à FIN• 1, puis un deuxième aéronef de la flottille sur une durée DEB• 2 à FIN• 2 et ainsi de suite, le convoi formé de la flottille 1 d'aéronefs et de l'aéronef ravitailleur 2 passant à proximité de différents terrains d'atterrissage de déroutement : terrain A, terrain B, terrain C, terrain D, etc.

Pour qu'une séquence de ravitaillement en vol d'une flottille 1 d'aéronefs soit viable, c'est-à-dire acceptable du point de vue de la sécurité des aéronefs ravitaillés, il faut qu'elle respecte les contraintes d'autonomie en carburant des aéronefs à ravitailler de la flottille 1, c'est-à-dire que les aéronefs à ravitailler entament tous leurs ravitaillements avant de puiser dans leurs réserves de carburant de sécurité destinées à les maintenir toujours à portée d'un terrain d'atterrissage sur lequel ils puissent se dérouter en cas de problème.

Le respect, par une séquence de ravitaillement en vol, des contraintes d'autonomie en carburant des aéronefs ravitaillés peut être vérifié dès que le point et le moment du rendez-vous avec l'aéronef ravitailleur sont connus avec suffisamment de précision. En effet, II est alors, possible :

- de prévoir les quantités de carburant dont disposeront encore chacun des aéronefs de la flottille 1 lorsqu'ils arriveront au point de rendez-vous avec l'aéronef ravitailleur 2 à partir de la connaissance de leurs réserves réelles, de leurs consommations et du parcours qu'ils ont encore à effectuer jusqu'au point de rendez-vous, et d'en déduire les longueurs maxima des trajets qu'ils seront capables de parcourir en compagnie de l'aéronef ravitailleur 2 avant de puiser dans leurs réserves de sécurité,
- de prévoir les délais d'attente de ravitaillement subis par chaque aéronef de la flottille depuis le début du rendez-vous à partir de la connaissance de l'ordre des aéronefs dans la file d'attente de ravitaillement et de leurs durées de passage à la perche de ravitaillement exprimées en tenant compte des durées des manoeuvres d'accrochage et de décrochage à la perche de ravitaillement et des durées de transfert des quantités de carburant demandées,
- de traduire les délais d'attente de ravitaillement estimés en distances parcourues, et
- de vérifier que les délais d'attente de ravitaillement que les aéronefs de la flottille 1 devront subir, exprimés en distances parcourues, sont inférieurs aux longueurs maxima qu'ils sont capables de parcourir.

La figure 4 illustre le problème posé par le respect de la contrainte d'autonomie en carburant d'un aéronef ravitaillé. L'aéronef à ravitailler 3 suit une trajectoire 23 de rejointe de l'aéronef ravitailleur en attente sur l'hippodrome de ravitaillement 20 pour un rendez-vous 24 légèrement en avance sur le rendez-vous prévu 21. Dans sa position actuelle, il dispose d'une réserve réelle de carburant qui permet d'estimer, à partir de la connaissance de sa consommation et de la trajectoire suivie, la quantité de carburant dont il disposera encore à son arrivée au point de rendez-vous effectif 24. Une fois parvenu au point de rendez-vous 24, il volera en convoi avec l'avion ravitailleur le long de l'hippodrome de ravitaillement jusqu'à ce que l'opération de ravitaillement en vol soit terminée pour toute la flottille dont il fait partie. Au cours de la première partie de vol en convoi où l'aéronef à ravitailler est en attente d'un début de ravitaillement, sa réserve de carburant ne doit pas descendre en dessous d'un volume de sécurité correspondant à ce qui lui est nécessaire pour atteindre un terrain d'atterrissage de déroutement, ici le terrain 25. Il y a donc une distance maximum que peut parcourir l'aéronef 3 au cours de son vol en convoi avec l'aéronef ravitailleur, en attente de son ravitaillement. Il est possible d'estimer le point limite 26 dit point loto, que peut atteindre l'aéronef 3 sur l'hippodrome de ravitaillement 20 sans être ravitaillé ni entamer sa réserve de carburant de sécurité puisque sa réserve réelle de carburant est connue, de même que la trajectoire qu'il va parcourir, la façon dont il va le faire, et la position du ou des terrains d'atterrissage 25 de déroutement. La distance séparant ce point loto 25 sur l'hippodrome de ravitaillement 20, du point de rendez-vous effectif 24 avec l'aéronef ravitailleur est la distance maximale L que peut parcourir l'aéronef 3, en convoi avec l'aéronef ravitailleur alors qu'il est en attente de ravitaillement. Le temps de parcours de cette distance correspond au temps d'attente maximum que peut se permettre l'aéronef à ravitailler 3.

La viabilité d'une séquence de ravitaillement d'une flottille d'aéronefs est une propriété importante puisque son absence entraîne la rupture de la formation de la flottille d'aéronef et souvent l'abandon de la poursuite de la mission. Elle est donc à vérifier avant l'adoption d'une proposition de séquence de ravitaillement en vol. Il faut en outre, que la séquence de ravitaillement en vol proposée soit optimale, c'est-à-dire minimise le nombre de passages à la perche de ravitaillement, les manoeuvres d'accrochage étant des opérations délicates, et maintienne la capacité opérationnelle de la flottille à son maximum au cours de son déroulement.

Pour minimiser le nombre de passages à la perche de ravitaillement, on recherche à ravitailler les aéronefs de la flottille en un seul passage à la perche de ravitaillement, sauf impossibilité d'attente pour manque d'autonomie, d'un ou plusieurs aéronefs, auquel cas on s'autorise jusqu'à deux passages à la perche de ravitaillement par aéronef ravitaillé.

Pour maintenir à son maximum la capacité opérationnelle de la flottille d'aéronefs ravitaillés, on cherche la séquence de ravitaillement en vol correspondant le plus possible à la délivrance de quantités décroissantes de carburant au cours des passages successifs des aéronefs ravitaillés à la perche de ravitaillement, les passages à la perche de ravitaillement étant d'autant plus rentables que la quantité de carburant transférée est importante.

L'optimisation d'une séquence de ravitaillement en vol d'une flottille d'aéronefs consiste à déterminer un ordre optimum de la file d'attente selon lequel les aéronefs doivent se présenter à la perche de ravitaillement, en supposant que chacun d'eux effectue au plus deux passages, le deuxième passage intervenant après tous les premiers passages, par une réintégration de la queue de la file d'attente, puis à déterminer les durées des passages en faisant en sorte d'annuler le plus possible de deuxièmes passages tout en respectant les contraintes sur les délais d'attente imposées par les autonomies des aéronefs à ravitailler.

Soit n le nombre d'aéronefs de la flottille, 1, 2, ..., n l'ordre adopté pour la file d'attente à la perche de ravitaillement, qui est de préférence l'ordre par quantités décroissantes de carburant à transférer puisqu'une flottille est souvent constituée d'aéronefs ayant des niveaux de consommation très proches et que les aéronefs ayant le moins d'autonomie sont ceux qui réclament le plus de carburant, D11+D12 la distance parcourue par l'aéronef ravitailleur, le temps de transférer en deux passages la quantité de carburant réclamée par le premier aéronef de la file d'attente, D21+D22 la distance parcourue par l'aéronef ravitailleur, le temps de transférer en deux passages la quantité de carburant réclamée par le deuxième aéronef de la file d'attente et ainsi de suite, Dn1+Dn2 étant la distance parcourue par l'aéronef ravitailleur, le temps de transférer en deux passages la quantité de carburant réclamée par le dernier aéronef de la file d'attente, L1, L2,..., Ln les distances séparant du point de rendez-vous les différents points loto des aéronefs de la flottille, le respect des contraintes en carburant des aéronefs de la flottille se traduit par la condition :

$$L(i+1) \geq \sum_{j=1}^{i} Dj1$$

La minimisation du nombre de passages à la perche de ravitaillement revient à annuler le plus possible de deuxièmes passages tout en veillant au respect de la condition précédente.

L'optimisation de la séquence de ravitaillement impose la fixation d'une durée minimum DMIN à un premier passage suffisant pour le transfert d'une quantité de carburant augmentant assez l'autonomie de l'aéronef ravitaillé pour qu'il puisse se replacer en fin de file d'attente et attendre le complément de son ravitaillement sans entamer sa réserve de carburant de secours, puis l'augmentation des durées des premiers passages jusqu'aux maxima rendus possibles par les capacités d'attente des aéronefs placés derrière dans la file d'attente.

On propose ci-après un procédé de gestion de ravitaillement en vol d'une flottille d'aéronefs permettant de parvenir à la détermination d'une séquence optimale de ravitaillement tenant compte des autonomies des aéronefs d'une flottille, en se basant sur le point de rendez-vous de la flottille d'aéronefs avec l'aéronef ravitailleur, les quantités de carburant réclamées, les distances séparant, du point de rendez-vous, les différents points loto des aéronefs à ravitailler et une durée minimum pour un passage à la perche de ravitaillement.

Au cours d'une première étape, on prend en compte une séquence arbitraire de ravitaillement basée sur une mise en file d'attente des aéronefs de la flottille selon un ordre A1, A2,..., An proposé par exemple, par le chef de flottille, et sur un unique passage de chaque aéronef de la flottille à la perche de ravitaillement, ces passages uniques nécessitant des distances de parcours D1, D2,..., Dn et l'on s'assure de la viabilité de cette séquence de ravitaillement arbitraire, c'est-à-dire du respect des autonomies des aéronefs de la flottille, par la vérification de l'ensemble des conditions :

$$\sum_{i=1}^{j} Di < L(j+1) \quad \text{avec} \quad 1 \leq j \leq n-1 \qquad (1)$$

Si ces conditions sont respectées dans leur ensemble, la séquence arbitraire de ravitaillement est possible et le procédé de gestion de ravitaillement peut s'arrêter.

Si l'une des conditions précédentes n'est pas respectée, la séquence arbitraire de ravitaillement est rejetée car elle pose un problème d'autonomie pour l'un au moins des aéronefs de la flottille.

En cas de rejet de la séquence arbitraire de ravitaillement, le procédé se poursuit par la détermination effective d'une séquence optimale de ravitaillement. Celle-ci consiste, en présence d'un constat d'aéronef entamant son ravitaillement hors du délai permis par son autonomie, à modifier la séquence de ravitaillement testée pour écourter l'attente de cet aéronef et faire en sorte qu'il se ravitailler dans les délais. Cette modification consiste à fractionner en deux passages, le ou les ravitaillements d'un ou plusieurs aéronefs qui précèdent dans la file d'attente l'aéronef concerné, un premier passage écourté à la perche de ravitaillement permettant à un aéronef de recevoir une quantité minimum de carburant augmentant suffisamment son autonomie pour qu'il puisse se replacer en fin de la file d'attente et attendre un deuxième passage à la perche de ravitaillement sans puiser dans sa réserve de carburant de sécurité.

Ce ou ces fractionnements doivent être efficaces, c'est-à-dire parvenir au but recherché du ravitaillement, dans les délais, de l'aéronef posant un problème d'autonomie tout en imposant un minimum de manoeuvres et en maintenant au maximum la capacité opérationnelle de la flottille tout au long du ravitaillement. Le nombre d'aéronefs dont le ravitaillement est fractionné en deux doit être minimum et les quantités de carburant délivrées au cours des premiers passages maxima.

Pour minimiser le nombre de passages à la perche de ravitaillement, les aéronefs posant un problème d'autonomie sont traités dans l'ordre de la file d'attente. Pour chaque aéronef repéré comme posant un problème d'autonomie, on cherche si un ou plusieurs fractionnements de ravitaillement d'aéronefs placés en amont dans la file d'attente permettraient d'éviter ce problème. Le choix pour un fractionnement de ravitaillement porte d'abord sur l'aéronef, s'il existe, qui est placé, dans la file d'attente, en amont de l'aéronef posant un problème d'autonomie et dont le fractionnement du ravitaillement en deux passages à la perche de ravitaillement permet d'approcher au mieux, par valeur supérieure, le gain de temps recherché, puis, si aucun ne permet le gain de temps escompté, sur deux aéronefs, s'ils existent, placés, dans la file d'attente, en amont de l'aéronef posant un problème d'autonomie, dont les fractionnements des ravitaillements permettent d'approcher au mieux, par valeur supérieure le gain de temps recherché et ainsi de suite, une absence de solution dans le choix des aéronefs à ravitaillement fractionné conduisant à un constat d'impossibilité de ravitaillement de la flottille complète, tandis qu'une présence de solution conduit à une proposition de séquence de ravitaillement modifiée dont la viabilité est testée avant d'être acceptée.

Lorsque la séquence arbitraire de ravitaillement proposée initialement se révèle non viable, on en profite, avant d'envisager un ou plusieurs fractionnements en deux passages des ravitaillements des aéronefs de la flottille, pour la remplacer par une séquence de ravitaillement dite nominale, toujours basée sur un seul passage par aéronef ravitaillé mais avec un ordre de file d'attente correspondant à des quantités décroissantes de carburant transférées, le premier servi étant celui ayant présenté la demande la plus importante, le deuxième une demande plus faible et ainsi de suite jusqu'au demier. Cette séquence nominale de ravitaillement a en effet les meilleures chances de permettre un maintien de la flottille au maximum de sa capacité opérationnelle pendant l'opération de ravitaillement dans la mesure où elle est constituée d'aéronefs aux performances comparables. Elle correspond à des distances D1, D2,..., Dn nécessaires au ravitaillement en un passage des aéronefs de la flottille formant une suite décroissante :

$$D1 \geq D2 \geq \cdots \geq Dn$$

Si elle est différente de la séquence initiale de ravitaillement, la séquence nominale de ravitaillement est à son tour testée quant à sa viabilité. Si elle se révèle viable, l'ensemble des conditions (1) étant remplies, elle est adoptée et le processus de détermination de séquence de ravitaillement est arrêté. Si elle se révèle non viable, un ou plusieurs aéronefs de la flottille ayant des problèmes d'autonomie prévisibles au cours de l'opération de ravitaillement, on peut encore envisager, par acquis de conscience, une troisième séquence de ravitaillement encore basée sur un seul passage par aéronef ravitaillé mais avec un ordre de file d'attente correspondant à des distances maxima L1, L2,..., Ln franchissables par les différents aéronefs de la flottille au cours de ravitaillement formant une suite croissante :

$$L1 \leq L2 \leq \cdots \leq Ln$$

Cette troisième séquence de ravitaillement basée sur un seul passage par aéronef ravitaillé est envisagée par acquis de conscience car elle correspond normalement à la séquence nominale de ravitaillement. Si elle est différente de la séquence nominale de ravitaillement, sa viabilité est testée. Si elle se révèle viable, le processus de détermination de séquence de ravitaillement est arrêté.

Lorsque les séquences précédentes de ravitaillement basées sur un seul passage par aéronef ravitaillé se sont toutes révélées non viables, on revient à la séquence nominale de ravitaillement que l'on cherche à rendre viable par fractionnement en deux passages du ravitaillement d'un ou plusieurs aéronefs de la flottille.

Avant d'envisager des fractionnements de ravitaillement, on vérifie qu'ils ont une chance de résoudre le ou les problèmes d'autonomie qui se présentent en testant si les aéronefs à ravitailler, placés en file d'attente, dans l'ordre adopté, peuvent attendre, pour être ravitaillés la fin des premiers passages des aéronefs qui les précèdent, en admettant que ces premiers passages durent un minimum de temps correspondant à une distance minimum parcourue DMIN pour chaque premier passage à la perche de ravitaillement, ce qui revient à vérifier la satisfaction des conditions :

$$i \times DMIN \leq L(i+1) \text{ avec } 1 \leq i \leq n-1, \qquad (2)$$

la distance minimum DMIN étant choisie en fonction des conditions opérationnelles, de façon à permettre un transfert d'une quantité minimum de carburant qui, à la fois, rentabilise un passage à la perche de ravitaillement, permette à l'aéronef ravitaillé de se replacer en fin de file d'attente et d'attendre un deuxième passage à la perche de ravitaillement sans avoir de problème d'autonomie.

En l'absence de satisfaction des conditions (2), le problème est considéré comme insoluble.

Lorsque les conditions (2) sont satisfaites, on opère en fonction du nombre d'aéronefs formant la flottille à ravitailler.

Cas d'une flottille de deux aéronefs

L'aéronef ayant un problème d'autonomie pendant le ravitaillement est nécessairement le deuxième. La solution consiste donc à fractionner le ravitaillement du premier aéronef, en deux passages correspondant à des distances de parcours D11, D12 tout en ravitaillant le deuxième aéronef en un seul passage correspondant à une distance de parcours D2 intercalée entre les distances de parcours D11 et D12 consacrées au ravitaillement du premier aéronef.

Lors du ravitaillement, le parcours en formation de l'aéronef ravitailleur et de la flottille est constitué de la succession D11, D2, D12. Pour le maintien de la flottille au maximum de sa capacité opérationnelle, le premier passage à la perche de ravitaillement du premier aéronef de la flottille est allongé au maximum permis par l'autonomie du deuxième aéronef de la flottille. Au lieu d'être réduit à la distance de parcours minimum DMIN, sa distance de parcours est prolongée pour atteindre la distance maxima de parcours L2 autorisée par l'autonomie du deuxième aéronef.

La séquence de ravitaillement adoptée est alors définie par le parcours:

D11, D2, D12

avec :

D11=L2 et D12=D1-D11

compte non tenu pour le deuxième terme des distances supplémentaires nécessitées par la deuxième manoeuvre d'accrochage à la perche de ravitaillement.

La figure 5 est un graphique illustrant les différents cas qui peuvent se présenter lors du ravitaillement en vol, à une même perche de ravitaillement, d'une flottille de deux aéronefs, pour un ordre de ravitaillement 1, 2 donné, des quantités de carburants demandées par chacun des deux aéronefs de la flottille et de la quantité minimale de carburant transférable au cours d'un passage à la perche de ravitaillement, estimées en distance de parcours D1, D2, DMIN nécessaires à l'aéronef ravitailleur pour leurs transferts, et de l'autonomie du deuxième aéronef de la flottille estimée en distance maximale franchissable L2.

Le graphique de la figure 5 montre un axe 30 gradué en distance avec pour variable la valeur de la distance maximale L2 franchissable par le deuxième aéronef de la flottille au cours de l'opération de ravitaillement, comptée de puis une origine O coïncidant avec le point de rendez-vous effectif de la flottille avec l'aéronef ravitailleur. Sur cet axe 30 gradué en distance sont repérées la distance minimum DMIN parcourue par l'aéronef ravitailleur au cours d'un premier passage d'un ravitaillement qui en comporte deux et la distance D1 que doit parcourir l'aéronef ravitailleur pour transférer au premier aéronef toute la quantité de carburant qu'il demande en un seul passage.

Lorsque la distance maximale L2 que peut parcourir le deuxième aéronef en attendant d'être ravitaillé est supérieure à la distance nécessaire à l'aéronef ravitailleur pour ravitailler entièrement le premier aéronef, il n'est pas nécessaire de fractionner le ravitaillement du premier aéronef. On se trouve dans la situation de la case 31. Pour cette situation, la séquence de ravitaillement adoptée est celle D1, D2 d'un ravitaillement à la suite, des deux aéronefs en un seul passage à la perche de ravitaillement.

Lorsque la distance maximale L2 que peut parcourir le deuxième aéronef en attente d'être ravitaillé est inférieure à DMIN, la séquence de ravitaillement est impossible sans attenter à l'autonomie du deuxième aéronef. Elle doit être abandonnée ou tout au moins l'ordre de ravitaillement des deux aéronefs de la flottille inversé. Le cas correspond à la case 32 indexée par 0

Lorsque la distance maximale L2 que peut parcourir le deuxième aéronef est comprise entre DMIN et D1, le respect de l'autonomie du deuxième aéronef impose de fractionner en deux passages le ravitaillement du premier aéronef, Un premier passage D11 à la perche de ravitaillement, supérieur à DMIN mais inférieur à L2 et un deuxième passage à la perche de ravitaillement de complément D12 venant après le ravitaillement D2 du deuxième aéronef. La situation correspond à la case 33. Pour cette situation, la séquence de ravitaillemerit adoptée est celle D11, D2, D12 d'un ravitaillement composé d'un premier passage D11 d'attente du premier aéronef à la perche de ravitaillement, suivi d'un unique passage D2 du deuxième aéronef à la perche de ravitaillement au cours duquel ce demier reçoit toute la quantité de carburant demandée et du deuxième passage D12 de complément, du premier aéronef au cours duquel ce demier reçoit le complément du carburant auquel il n'a pas eu droit lors de son premier passage.

Cas d'une flottille de trois aéronefs

Comme indiqué précédemment, deux vérifications ont déjà été menées, celle de l'existence d'un problème d'autonomie révélée par le fait que l'une au moins des conditions D1<L2 et D1+D2<L3 n'est pas remplie et celle de la possibilité de résoudre ce problème d'autonomie révélée par le fait que les conditions DMIN<L2 et 2DMIN<L3 sont remplies.

Le problème d'autonomie peut concemer soit le deuxième aéronef, soit le troisième aéronef, soit les deuxième et troisième aéronefs de la flottille. Il faut donc le préciser.

On commence par vérifier si le problème d'autonomie concerne le seul deuxième aéronef de la flottille, en observant à nouveau la façon dont les conditions D1<L2 et D1+D2<L3 sont remplies.

La condition D1<L2 peut être la seule à ne pas être remplie. Le problème d'autonomie concerne le seul aéronef placé en deuxième position dans la file d'attente. La condition DMIN<L2 étant vérifiée par hypothèse, un fractionnement en deux passages du ravitaillement du premier aéronef permet de résoudre le problème d'autonomie du deuxième aéronef. On fractionne alors en deux passages le ravitaillement du premier aéronef :

$$D1=D11+D12$$

avec

$$D11=DMIN$$

Si la condition DMIN<L2 n'était pas satisfaite, il n'y aurait pas de solution viable et aucune séquence de ravitaillement ne serait proposée.

La condition D1+D2<L3 peut être la seule à ne pas être remplie. Le problème d'autonomie concerne le seul aéronef placé en troisième position dans la file d'attente. La condition 2DMIN<L3 étant vérifiée par hypothèse, ce problème d'autonomie est résoluble par un ou plusieurs fractionnements en deux passages, des ravitaillements des aéronefs placés en amont dans la file d'attente. On cherche tout d'abord à savoir si un fractionnement en deux passages du ravitaillement du deuxième aéronef pourrait suffire à résoudre le problème d'autonomie du troisième aéronef en vérifiant si la condition D1+DMIN<L3 est remplie.

Si la condition D1+DMIN<L3 est remplie, un fractionnement en deux passages du ravitaillement du deuxième aéronef permet de résoudre le problème d'autonomie du troisième aéronef. On fractionne alors en deux passages le ravitaillement du deuxième aéronef :

$$D2=D21+D22$$

avec

$$D21=DMIN$$

Si la condition D1+DMIN<L3 n'est pas vérifiée, un fractionnement en deux passages, du ravitaillement du deuxième aéronef ne suffit pas à résoudre le problème d'autonomie du troisième. On cherche alors à savoir si un fractionnement en deux passages, du ravitaillement du premier aéronef résoudrait ce problème d'autonomie en vérifiant si la condition DMIN+D2<L3 est remplie.

Si la condition DMIN+D2<L3 est remplie, un fractionnement en deux passages du ravitaillement du premier aéronef permet de résoudre le problème d'autonomie du troisième aéronef. On fractionne alors en deux passages le ravitaillement du premier aéronef:

$$D1=D11+D12$$

avec

$$D11=DMIN$$

Si la condition DMIN+D2<L3 n'est pas remplie, un fractionnement en deux passages, du ravitaillement du deuxième ou du premier aéronef ne permet pas de résoudre le problème d'autonomie du troisième aéronef. On est alors contraint à fractionner en deux passages les ravitaillements des premier et deuxième aéronefs :

$$D1=D11+D12$$

$$D2=D21 +D22$$

avec

$$D11=DMIN$$

$$D21=DMIN$$

Si la condition 2DMIN<L3 n'était pas remplie, il n'y aurait aucune solution viable et aucune séquence de ravitaillement ne serait proposée.

Les conditions D1<L2 et D1+D2<L3 peuvent ne pas être remplies simultanément, montrant que des problème d'autonomie affectent à la fois les deux aéronefs placés en deuxième et troisième positions dans la file d'attente de ravitaillement. Comme les conditions DMIN<L2 et 2DMIN<L3 sont supposées remplies, des fractionnements en deux passages des ravitaillements des premier et deuxième aéronefs permettent de résoudre les problèmes d'autonomie des deuxième et troisième aéronef de la flottille :

$$D1=D11+D12$$

$$D2=D21+D22$$

avec

$$D11=DMIN$$

$$D21=DMIN$$

Lorsqu'une solution de fractionnement permettant de résoudre les problèmes d'autonomie a été trouvée, elle est rendue optimale, du point de vue de la capacité opérationnelle de la flottille pendant le ravitaillement, en allongeant les durées du ou des premiers passages à la perche de ravitaillement jusqu'au maximum permis par le respect des autonomies des aéronefs de la flottille.

Dans le cas du seul fractionnement du ravitaillement du deuxième aéronef de la file d'attente de ravitaillement formée par la flottille, le premier passage D21 du deuxième aéronef de la flottille à la perche de ravitaillement est prolongé de DMIN à L3-D1. Ainsi, la séquence de ravitaillement proposée est alors :

D1, D21=L3-D1, D3, D22=D2-D21

Dans le cas du seul fractionnement du ravitaillement du premier aéronef de la file d'attente de ravitaillement formée par la flottille, le premier passage D11 du premier aéronef de la flottille à la perche de ravitaillement est prolongé de DMIN à min(L2, L3-D2). La séquence de ravitaillement proposée devient alors :

D11=min(L2, L3-D2), D2, D3, D12=D1-D11

Dans le cas des fractionnements des ravitaillements des premier et deuxième aéronefs de la file d'attente formée par la flottille, les premiers passages D11 et D21 des premiers et deuxième aéronefs à la perche de ravitaillement sont prolongés par incréments successifs, de la valeur DMIN à une valeur limite permettant de respecter encore les conditions D11<L2 et D11+D21<L3. La séquence de ravitaillement proposée devient alors :

D11=DMIN+K, D21=DMIN+K,D3, D12=D1-D11, D22=D2-D21

K étant l'augmentation maximale de la distance DMIN permettant de respecter les conditions :

D11<L2 et D11+D21<L3

La figure 6 est un tableau qui résume, dans le cas d'un ravitaillement d'une flottille de trois aéronefs, l'ensemble des solutions et absences de solution de fractionnement de ravitaillement permettant de rendre viable une séquence de ravitaillement, avec un minimum de passages à la perche de ravitaillement. Ce tableau est à deux dimensions, l'une ayant pour variable l'autonomie L2 du deuxième aéronef dans la file d'attente de ravitaillement et l'autre l'autonomie L3 du troisième aéronef dans la file d'attente de ravitaillement. Il est tracé en fonction des valeurs des autonomies L2 et L3 des aéronefs de la flottille figurant en deuxième et troisième position dans la file d'attente de ravitaillement, comparées aux valeurs des quantités de carburant D1, D2, D3 demandées par les trois aéronefs de la flottille et supposées être de valeurs décroissantes, et de la quantité minimale DMIN de carburant transférable au cours d'un passage à la perche de ravitaillement, les différentes variables étant exprimées en distance de parcours effectuées par l'aéronef ravitailleur.

On voit, sur le tableau de la figure 6, qu'une même solution, de fractionnement peut convenir pour différentes valeurs des autonomies des aéronefs de la flottille placés en deuxième et troisième positions dans la file d'attente.

Deux seuls cas font l'objet d'une solution particulière.

Le premier cas indexé par 40 correspond à l'absence de tout fractionnement de ravitaillement, l'aéronef placé en deuxième dans la file d'attente de ravitaillement pouvant attendre la fin du ravitaillement du premier aéronef, la condition D1<L2 étant vérifiée, et l'aéronef placé en fin de file d'attente pouvant attendre les ravitaillements des deux premiers aéronefs, la condition D1+D2<L3 étant vérifiée.

Le deuxième cas indexé par 41 correspond au seul fractionnement du ravitaillement de l'aéronef placé en deuxième dans la file d'attente, celui-ci n'ayant pas de problème d'autonomie, la condition D1<L2 étant vérifiée, mais l'aéronef placé en troisième dans la file d'attente en ayant un, son autonomie L3 se situant dans la plageD1+DMIN<L3<D1+D2.

Les autres cas se répartissent en trois catégories indexées par 42, 43,44.

La catégorie 42 correspond au seul fractionnement du ravitaillement du premier aéronef de la file d'attente qui se justifie, soit en cas d'un problème d'autonomie pour le seul aéronef placé en deuxième dans la file d'attente tel que l'autonomie L2 de ce deuxième aéronef se situe dans la plage DMIN<L2<D1, soit en cas de problème d'autonomie pour le seul aéronef placé en troisième dans la file d'attente tel que l'autonomie L3 de ce troisième aéronef se situe dans la plage D2+DMIN<L3<D1+DMIN, soit encore, en cas de problèmes d'autonomie des aéronefs placés en deuxième et en troisième dans la file d'attente tels que leurs autonomies L2 et L3 se situent dans les plages DMIN<L2<D1 et D2+DMIN<L3<D1+D2.

La catégorie 43 correspond au double fractionnement des ravitaillements des aéronefs placés en premier et en deuxième dans la file d'attente, lorsque l'aéronef placé en troisième dans la file d'attente a un problème d'autonomie tel que son autonomie L3 se situe dans la plage 2DMIN<L3<D2+DMIN, l'aéronef placé en deuxième dans la file d'attente ayant ou non un problème d'autonomie.

La catégorie 44 correspond à tous les cas insolubles, l'un au moins des aéronefs placé en deuxième ou en troisième dans la file d'attente de ravitaillement ne pouvant attendre la durée minimum DMIN d'un premier passage de ravitaillement du premier aéronef.

Le regroupement par catégories des solutions de fractionnement que le tableau de la figure 6 fait apparaître, rend possible une méthode de recherche accélérée de la solution de fractionnement ou non des ravitaillements d'une flottille de trois aéronefs permettant de résoudre d'éventuels problèmes d'autonomie avec un minimum de passages à la perche de ravitaillement. Cette méthode de recherche accélérée est déduite de la méthode générale précédemment décrite et fait appel à une technique de sélection, par éliminations successives, de la solution la plus adaptée.

Cette recherche accélérée commence par le test du premier cas singulier 40 où un fractionnement n'est pas nécessaire. Ce cas 40 d'absence de fractionnement de ravitaillement déjà envisagé au début de la méthode générale décrite précédemment, est retenu et la recherche arrêtée lorsque les aéronefs placés en deuxième et troisième positions dans la file d'attente de ravitaillement peuvent attendre leur tour, c'est-à-dire lorsque les conditions :D1<L2, D1+D2<L3 sont remplies. Autrement, il est rejeté et la recherche est poursuivie.

Lorsque le cas 40 d'absence de fractionnement de ravitaillement a été rejeté par suite de problèmes d'autonomie, l'une au moins des conditions D1<L2 ou D1+D2<L3 n'étant pas satisfaite, on vérifie que le ou les problèmes d'autonomie sont résolubles par des fractionnements de ravitaillement en deux passages. Cette vérification se fait en observant la satisfaction des conditions DMIN<L2 et 2DMIN<L3.

Si l'une des conditions DMIN<L2 ou 2DMIN<L3 n'est pas satisfaite, les fractionnements de ravitaillement ne permettent pas de résoudre les problèmes d'autonomie. On se trouve dans les situations de la catégorie 44 et on ne peut que signaler une impossibilité du ravitaillement.

Si les deux conditions DMIN<L2 et 2DMIN<L3 sont satisfaites, on poursuit la recherche par l'observation du deuxième cas singulier 41 correspondant au seul fractionnement du ravitaillement de l'aéronef placé en deuxième dans la file d'attente. Ce deuxième cas singulier 41 est retenu et la recherche arrêtée en cas de respects simultanés des conditions D1<L2 et D1+DMIN<L3. Si non il est rejeté à son tour et la recherche est poursuivie.

Lorsque les deux cas singuliers 40 et 41 ont été éliminés la catégorie 42 correspondant aux différents cas de manque d'autonomie ne nécessitant que le seul fractionnement du ravitaillement de l'aéronef placé en premier dans la file d'attente est envisagé. Compte tenu de l'élimination des deux cas singuliers 40 et 41, la seule condition à vérifier pour la sélection de cette catégorie 42 est la condition D2+DMIN<L3. Si cette condition est vérifiée, la catégorie 42 correspondant au seul fractionnement du ravitaillement du deuxième aéronef de la file d'attente est retenue et la recherche arrêtée. Si non la catégorie 42 est rejetée à son tour et la recherche poursuivie.

Lorsque les deux cas singuliers 40 et 41 ainsi que la catégorie 42 ont été éliminés, la catégorie 43 correspondant aux différents cas de manque d'autonomie résolubles par les fractionnements des ravitaillements des premier et deuxième aéronefs de la file d'attente qui est la seule restante, est retenue et la recherche arrêtée.

Comme précédemment, lorsqu'un ou deux fractionnements de ravitaillement ont été retenus (cas singulier 41 et catégories 42 et 43), les durées des premiers passages à la perche de ravitaillement sont maximisées, ce qui implique que, pour le cas singulier 41 d'un unique fractionnement du ravitaillement de l'aéronef placé en deuxième dans la file d'attente, le premier passage D21 est allongé de DMIN à L3-D1, que, pour la catégorie 42 correspondant à un unique fractionnement du ravitaillement de l'aéronef placé en premier dans la file d'attente, le premier passage D11 est allongé de DMIN à min(L2, L3-D2) et que, pour la catégorie 43 correspondant aux fractionnements des ravitaillements des aéronefs placés en premier et en deuxième dans la file d'attente, les durées des premiers passages D11 et D21 sont prolongées de DMIN à la valeur maximale permettant de respecter les conditions d'autonomie, à savoir D11 <L2 et D11+D21<L3.

<u>Cas d'une flottille de quatre aéronefs</u>

La méthode générale de recherche d'une séquence de ravitaillement respectant les autonomies des aéronefs de la flottille et minimisant les passages à la perche de ravitaillement décrite précédemment et dont l'application à une flottille de trois aéronefs vient d'être détaillée s'étend sans difficulté à une flottille de quatre aéronefs. Elle conduit à un ensemble de solutions et d'absences de solutions qui peut être résumé dans un tableau à trois dimensions, une première dimension selon l'autonomie L2 du deuxième aéronef dans la file d'attente de ravitaillement, une deuxième dimension selon l'autonomie L3 du troisième aéronef dans la file d'attente de ravitaillement et une troisième dimension selon l'autonomie L4 du quatrième aéronef dans la file d'attente de ravitaillement. Ce tableau à trois dimensions peut faire l'objet d'une représentation plane en le projetant selon un de ses axes. Il est illustré par les figures 7a et 7b qui résultent d'une projection par rapport à l'axe de sa première dimension L2 et qui sont consacrées au cas où les aéronefs à ravitailler sont placés dans un ordre de file d'attente de ravitaillement correspondant à des quantités de carburant demandées de valeurs décroissantes.

Plus précisément, le tableau plan de la figure 7a rassemble les solutions adaptées aux situations dans lesquelles l'aéronef placé en deuxième position dans la file d'attente de ravitaillement n'a pas de problème d'autonomie, la condition D1<L2 étant respectée, tandis que le tableau plan de la figure 7b rassemble les solutions adaptées aux situations dans lesquelles l'aéronef placé en deuxième position dans la file d'attente de ravitaillement a un problème d'autonomie résoluble par un fractionnement du premier aéronef de la file, les conditions DMIN<L2<D1 étant respectées. En toute rigueur, d'autres situations peuvent se produire mais elles correspondent toutes à l'hypothèse où le deuxième aéronef dans la file d'attente de ravitaillement à un problème d'autonomie tel qu'il ne peut attendre la fin d'un premier passage à la perche de ravitaillement du premier aéronef de la file. Il n'y a alors pas de solutions, ce qui se traduit par un tableau plan qui ne comporte que la seule catégorie des cas insolubles et dont la représentation n'apporte aucune information particulière.

Comme précédemment pour le tableau de la figure 6, les tableaux des figures 7a et 7b montrent qu'une même solution, de fractionnement peut convenir pour différentes valeurs des autonomies des aéronefs de la flottille placés en deuxième, troisième et quatrième positions dans la file d'attente.

Deux seuls cas font l'objet d'une solution particulière.

Le premier cas indexé par 50 sur la figure 7a correspond à i'absence de tout fractionnement de ravitaillement, l'aéronef placé en deuxième position dans la file d'attente de ravitaillement pouvant attendre la fin du ravitaillement du premier aéronef, la condition D1<L2 étant vérifiée pour tout le tableau de la figure 7a, l'aéronef placé en troisième position dans la file d'attente pouvant attendre les fins des ravitaillements des premier et deuxième aéronefs, la condition D1+D2<L3 étant vérifiée et l'aéronef placé en fin de file d'attente pouvant attendre les ravitaillements des trois premiers aéronefs, la condition D1+D2+D3<L4 étant vérifiée.

Le deuxième cas indexé par 51 sur la figure 7a correspond au seul fractionnement du ravitaillement de l'aéronef placé en troisième position dans la file d'attente, celui-ci, ni ceux qui le précèdent dans la file d'attente, n'ayant de problème d'autonomie, la condition D1<L2 étant vérifiée pour tout le tableau de la figure 7a et la condition D1+D2<L3 étant aussi vérifiée dans ce cas, mais l'aéronef placé en quatrième position dans la file d'attente ayant un problème d'autonomie, son autonomie L4 se situant dans la plage D1+D2+DMIN<L3<D1 +D2+D3.

Les autres cas se répartissent en différentes catégories indexées par 52, 53, 54, 55, 56, 57 58, 60, 61, 62, 63, 64 et apparaissant soit dans la figure 7a, soit dans la figure 7b.

En commençant par la figure 7a, qui correspond aux situations de ravitaillement dans lesquels l'aéronef en deuxième position dans la file d'attente n'a jamais de problème d'autonomie, la condition D1<L2 étant toujours remplie, on peut répertorier :

- une catégorie 52 correspondant au seul fractionnement du ravitaillement du deuxième aéronef de la file d'attente, qui se justifie, soit en cas de problème d'autonomie pour le seul aéronef placé en quatrième position dans la file d'attente tel que l'autonomie L4 de ce quatrième aéronef se situe dans la plage D3+D1+DMIN<L4<D2+D1+DMIN, soit en cas d'un problème d'autonomie pour le seul aéronef placé en troisième position dans la file d'attente tel que l'autonomie L3 de ce troisième aéronef se situe dans la plage D1+DMIN<L3<D1+D2, soit encore, en cas de problèmes d'autonomie des aéronefs placés en troisième et quatrième positions dans la file d'attente tels que leurs autonomies L3 et L4 se situent dans les plages D1+DMIN<L3<D1+D2 et D3+D1+DMIN<L4<D1+D2+D3,
- une catégorie 53 correspondant au seul fractionnement du ravitaillement du premier aéronef de la file d'attente, qui se justifie, soit en cas de problème d'autonomie pour le seul aéronef placé en quatrième position dans la file d'attente tel que l'autonomie L4 de ce quatrième aéronef se situe dans la plage D3+D2+DMIN<L4<D3+D1+DMIN, soit en cas d'un problème d'autonomie pour le seul aéronef placé en troisième position dans la file d'attente tel que l'autonomie L3 de ce troisième aéronef se situe dans la plage D2+DMIN<L3<D1+DMIN, soit encore, en cas de problèmes d'autonomie des aéronefs placés en troisième et quatrième positions dans la file d'attente tels que leurs autonomies L3 et L4 se situent dans les plages D2+DMIN<L3<D1+D2 et D3+D2+DMIN<L4<D3+D1+DMIN ou dans les plages D2+DMIN<L3<D1+DMIN et D3+D2+DMIN<L4<D1+D2+D3,
- une catégorie 54 correspondant au double fractionnement des ravitaillements des aéronefs placés en deuxième et troisième positions dans la file d'attente, lorsque l'aéronef placé en quatrième dans la file d'attente a un problème d'autonomie tel que son autonomie L4 se situe dans la plage D1+2DMIN<L4<D3+D2+DMIN, que l'aéronef placé en troisième position dans la file d'attente a une autonomie L3 restant supérieure à D1+DMIN et que l'aéronef placé en deuxième position dans la file d'attente n'a pas de problème d'autonomie,
- une catégorie 55 correspondant au double fractionnement des ravitaillements des aéronefs placés en premier et en troisième positions dans la file d'attente, soit en cas d'un problème d'autonomie pour le seul aéronef placé en quatrième position dans la file d'attente tel que son autonomie L4 se situe dans la plage D2+2DMIN<L4<D1+2DMIN, soit en cas de problèmes d'autonomie des aéronefs placés en troisième et quatrième positions dans la file d'attente tels que leurs autonomies L3 et L4 se situent dans les plages D2+2DMIN<L4<D1+2DMIN et D2+DMIN<L3<D1+D2 ou dans les plages D2+2DMIN<L4<D3+D2+DMIN et D2+DMIN<L3<D1+DMIN,
- une catégorie 56 correspondant aux fractionnements des ravitaillements des premier et deuxième aéronefs de la file d'attente qui se justifie, soit en cas de problème d'autonomie pour le seul aéronef placé en quatrième position dans la file d'attente tel que l'autonomie L4 de ce quatrième aéronef se situe dans la plage D3+2DMIN<L4<D2+2DMIN, soit en cas d'un problème d'autonomie pour le seul aéronef placé en troisième position dans la file d'attente tel que l'autonomie L3 de ce troisième aéronef se situe dans la plage 2DMIN<L3<D2+DMIN, soit encore, en cas de problèmes d'autonomie des aéronefs placés en troisième et quatrième positions dans la file d'attente tels que leurs autonomies L3 et L4 se situent dans les plages 2DMIN<L3<D1+D2 et D3+2DMIN<L4<D2+2DMIN ou dans les plages 2DMIN<L3<D2+DMIN et D3+2DMIN<L4<D1+D2+D3,

- une catégorie 57 correspondant aux fractionnements des ravitaillements des premier, deuxième et troisième aéronefs de la file d'attente lorsque l'aéronef placé en quatrième position dans la file d'attente de ravitaillement a un problème d'autonomie tel que son autonomie L4 se situe dans la plage 3DMIN<L4<D3+2DMIN, et
- une catégorie 58 qui correspond à des cas insolubles, l'un au moins des aéronefs placé en troisième ou en quatrième position dans la file d'attente de ravitaillement ne pouvant attendre la durée des premiers passages de ravitaillement des aéronefs qui les précèdent dans la file d'attente.

En poursuivant par la figure 7b qui correspond aux situations de ravitaillement dans lesquelles l'aéronef en deuxième position dans la file d'attente a un problème d'autonomie résoluble par un fractionnement du ravitaillement du premier aéronef de la file d'attente, on peut encore répertorier :

- une catégorie 60 qui correspond au seul fractionnement du ravitaillement de l'aéronef en première position dans la file d'attente, soit en cas de problème d'autonomie pour le seul aéronef placé en deuxième position dans la file d'attente qui, pour toutes les situations du tableau de la figure 7b, a une autonomie L2 située dans la plage DMIN<L2<D1, soit en cas d'un double problème d'autonomie, celui de l'aéronef placé en deuxième position dans la file d'attente dont l'autonomie L2 est située dans la plage DMIN<L2<D1 et celui de l'aéronef placé en troisième position dans la file d'attente lorsque son autonomie L3 se situe dans la plage D2+DMIN<L3<D1+D2 ou celui de l'aéronef placé en deuxième dans la file d'attente dont l'autonomie L2 est située dans la plage DMIN<L2<D1 et celui de l'aéronef placé en quatrième position dans la file d'attente lorsque son autonomie L4 se situe dans la plage D3+D2+DMIN<L4<D1+D2+D3, soit encore en cas d'un triple problème d'autonomie, celui de l'aéronef placé en deuxième dans la file d'attente dont l'autonomie L2 est située dans la plage DMIN<L2<D1, celui de l'aéronef placé en troisième dans la file d'attente lorsque son autonomie L3 se situe dans la plage D2+DMIN<L3<D1+D2 et celui de l'aéronef placé en quatrième position dans la file d'attente lorsque son autonomie L4 se situe dans la plage D3+D2+DMIN<L4<D1+D2+D3,
- une catégorie 61 qui correspond aux fractionnements des ravitaillements des aéronefs placés en première et troisième positions dans la file d'attente, en cas d'un double ou triple problème d'autonomie frappant l'aéronef placé en deuxième position dans la file d'attente dont l'autonomie L2 est située dans la plage DMIN<L2<D1, l'aéronef placé en quatrième position dans la file d'attente lorsque son autonomie L4 se situe dans la plage D2+2DMIN<L4<D3+D2+DMIN et éventuellement l'aéronef placé en troisième position dans la file d'attente à la condition que son autonomie L3 reste supérieure à D2+DMIN,
- une catégorie 62 qui correspond aux fractionnements des ravitaillements des aéronefs placés en première et deuxième positions dans la file d'attente, soit en cas d'un double problème d'autonomie, celui de l'aéronef placé en deuxième position dans la file d'attente dont l'autonomie L2 est située dans la plage DMIN<L2<D1 et celui de l'aéronef placé en troisième position dans la file d'attente lorsque son autonomie L3 se situe dans la plage 2DMIN<L3<D2+DMIN ou celui de l'aéronef placé en quatrième position dans la file d'attente lorsque son autonomie L4 se situe dans la plage D3+2DMIN<L4<D2+2DMIN, soit en cas d'un triple problème d'autonomie, celui de l'aéronef placé en deuxième position dans la file d'attente dont l'autonomie L2 est située dans la plage DMIN<L2<D1, et ceux des aéronefs placés en troisième et quatrième positions dans la file d'attente dont les autonomies L3 et L4 se situent dans les plages 2DMIN<L3<D1+D2 et D3+2DMIN<L4<D2+2DMIN ou 2DMIN<L3<D2+DMIN et D3+2DMIN<L4<D1+D2+D3,
- une catégorie 63 qui correspond aux fractionnements des ravitaillements des aéronefs placés en première, deuxième et troisième positions dans la file d'attente soit, en cas d'un double problème d'autonomie, celui de l'aéronef placé en deuxième position dans la file d'attente dont l'autonomie L2 est située dans la plage DMIN<L2<D1 et celui de l'aéronef placé en quatrième position dans la file d'attente dont l'autonomie se situe dans la plage 30MIN<L4<D3+2DMIN, l'aéronef placé en troisième position dans la file d'attente n'ayant pas de problème d'autonomie, son autonomie L3 respectant la condition D1+D2<L3, soit en cas d'un triple problème d'autonomie, celui de l'aéronef placé en deuxième position dans la file d'attente dont l'autonomie L3 est située dans la plage DMIN<L2<D1, celui de l'aéronef placé en troisième position dans la file d'attente dont l'autonomie L3 se situe dans la plage 2DMIN<L3<D1+D2 et celui de l'aéronef placé en quatrième position dans la file d'àttente dont l'autonomie L4 se situe dans la plage 3DMIN<L4<D3+2DMIN, et
- une catégorie 64 qui correspond à des cas insolubles, l'un au moins des aéronefs placé en troisième ou en quatrième position dans la file d'attente de ravitaillement ne pouvant attendre la durée des premiers passages de ravitaillement des aéronefs qui les précèdent dans la file d'attente.

Comme précédemment, dans le cas d'une flottille composée de trois aéronefs, le regroupement par catégories des solutions de fractionnement que les tableaux des figures 7a et 7b montrent, rend possible une méthode de recherche accélérée de la solution de fractionnement ou non des ravitaillements d'une flottille de quatre aéronefs permettant de résoudre d'éventuels problèmes d'autonomie avec un minimum de passage à la perche de ravitaillement. Cette méthode de recherche accélérée est déduite de la méthode générale précédemment décrite et fait appel à une technique de sélection par éliminations successives, de la solution la plus adaptée.

Cette recherche accélérée commence par le test de viabilité du cas singulier 50 d'absence de fractionnement de ravitaillement, envisagé au début de la méthode générale décrite précédemment. L'absence de fractionnement des ravitaillements est retenu et la recherche arrêtée lorsque les aéronefs placés en deuxième, troisième et quatrième positions dans la file d'attente de ravitaillement peuvent attendre leur tour, c'est-à-dire lorsque les conditions :D1<L2, D1+D2<L3 et D1+D2+D3<L4 sont remplies. Autrement, le cas singulier 50 est rejeté et la recherche est poursuivie.

Lorsque le cas 50 d'absence de fractionnement de ravitaillement ne convient pas, c'est qu'il se pose un ou plusieurs problèmes d'autonomie. On recherche alors si ces problèmes d'autonomie sont résolubles par des fractionnements des ravitaillements des aéronefs placés en amont dans la file d'attente en envisageant les catégories 58 et 64 rassemblant les situations d'impossibilité. L'appartenance à ces catégories 58 et 64 d'impossibilité se manifeste par le non respect de l'une des conditions DMIN<L2 ou 2DMIN<L3 ou 3DMIN<L4. Si l'une de ces conditions n'est pas remplie, la recherche est arrêtée car vouée à l'échec.

Si ces conditions sont respectées, le ou les problèmes d'autonomie qui ont conduit à l'élimination du cas singulier 50 sont résolubles par un ou plusieurs fractionnements des ravitaillements. La recherche se poursuit alors pour trouver le ou les fractionnements de ravitaillement conduisant à un minimum de passages à la perche de ravitaillement tout en éludant les problèmes d'autonomie.

Le cas 51 du seul fractionnement du ravitaillement de l'aéronef placé en troisième dans la file d'attente est alors envisagé. Il est retenu et la recherche arrêtée en cas de respects simultanés des conditions D1<L2, D1+D2<L3 et D1+D2+DMIN<L4. Si non il est rejeté à son tour et la recherche est poursuivie.

Lorsque les deux cas singuliers 50 et 51 ont été éliminés, la catégorie 52 correspondant aux différents cas de manque d'autonomie résolubles par le seul fractionnement du ravitaillement de l'aéronef placé en deuxième dans la file d'attente est envisagée. Compte tenu des éliminations préalables des deux cas singuliers 50 et 51, les seules conditions à vérifier pour la sélection de cette catégorie 52 sont les conditions D1<L2, D1+DMIN<L3 et D1+D3+DMIN<L4. Si ces conditions sont toutes vérifiées, le seul fractionnement du ravitaillement du deuxième aéronef de la file d'attente est retenu et la recherche arrêtée. Si non la catégorie 52 est rejetée à son tour et la recherche poursuivie.

Lorsque la catégorie 52 a été éliminée, les catégories 53 et 60 correspondant aux différents cas de manque d'autonomie résolubles par le seul fractionnement du ravitaillement de l'aéronef placé en tête de la file d'attente sont envisagées. Compte tenu des éliminations préalables des deux cas singuliers 50, 51 et de la catégorie 52, les seules conditions à vérifier pour la sélection de ces catégories sont les conditions D2+DMIN<L3 et D3+D2+DMIN<L4. Si ces conditions sont vérifiées, le seul fractionnement du ravitaillement de l'aéronef placé en premier dans la file d'attente est retenu et la recherche arrêtée. Si non les catégories 53 et 60 sont rejetées à leurs tours et la recherche poursuivie.

Lorsque les catégories 53 et 60 ont été éliminées, la catégorie 54 correspondant aux différents cas de manque d'autonomie résolubles par les fractionnements des seuls aéronefs placés en deuxième et troisième positions dans la file d'attente est envisagée. Compte tenu des éliminations préalables des deux cas singuliers et de la catégorie 52, les seules conditions à vérifier pour la sélection de cette catégorie sont les conditions D1<L2, D1+DMIN<L3 et D1+2DMIN<L4. Si ces conditions sont toutes vérifiées, les fractionnements des ravitaillements des seuls aéronefs placés en deuxième et troisième positions dans la file d'attente sont retenus et la recherche arrêtée. Si non, la catégorie 54 est rejetée à son tour et la recherche poursuivie.

Lorsque la catégorie 54 a été éliminée, les catégories 55 et 61 correspondant aux différents cas de manque d'autonomie résolubles par les fractionnements des ravitaillements des seuls aéronefs placés en première et troisième positions de la file d'attente sont envisagées. Compte tenu des éliminations préalables des deux cas singuliers 50, 51 et des catégories 52, 53, 54, 60, les seules conditions à vérifier pour la sélection de ces catégories sont les conditions D2+DMIN<L3 et D2+2DMIN<L4. Si ces conditions sont vérifiées, les fractionnements des ravitaillements des seuls aéronefs placés en première et troisième positions de la file d'attente sont retenus et la recherche arrêtée. Si non les catégories 55 et 61 sont rejetées à leurs tours et la recherche poursuivie.

Lorsque les catégories 55 et 61 ont été éliminées, les catégories 56 et 62 correspondant aux différents cas de manque d'autonomie résolubles par les fractionnements des ravitaillements des seuls aéronefs placés en première et deuxième positions de la file d'attente sont envisagées. Compte tenu des éliminations préalables des deux cas singuliers 50, 51 et des catégories 52, 53, 54, 55, 60, 61, la seule condition à vérifier pour la sélection de ces catégories est la condition D3+2DMIN<L4. Si cette condition est vérifiée, les fractionnements des ravitaillements des seuls aéronefs placés en première et deuxième positions de la file d'attente sont retenus et la recherche arrêtée. Si non les catégories 56 et 62 sont rejetées à leurs tours et la recherche poursuivie.

Lorsque les catégories 56 et 62 ont été éliminées car ne convenant pas, il ne reste plus que les catégories 57 et 63 correspondant aux fractionnements des ravitaillements des aéronefs placés en première, deuxième et troisième positions dans la file d'attente. Ces fractionnements sont adoptés puisqu'il a été vérifié en début de recherche que les problèmes d'autonomie étaient résolubles et que les fractionnements des ravitaillements de tous les aéronefs autres que celui placé en queue de file d'attente constituent la solution ultime.

Comme précédemment, lorsqu'un ou plusieurs fractionnements des ravitaillements ont été retenus, les durées des premiers passages à la perche de ravitaillement sont maximisées tout en veillant au respect des autonomies des aéronefs.

Ainsi, dans le cas du seul fractionnement du ravitaillement de l'aéronef placé en troisième dans la file d'attente, le premier passage D31 à la perche de ravitaillement de l'aéronef en troisième position dans la file d'attente est allongé de DMIN à L4-D1-D2. Dans le cas du seul fractionnement du ravitaillement placé en deuxième dans la file d'attente, le premier passage D21 à la perche de ravitaillement de l'aéronef en deuxième position dans la file d'attente est allongé de DMIN à min(L3-D1, L4-D1-D2). Dans le cas du seul fractionnement du ravitaillement placé en premier dans la file d'attente, le premier passage D11 à la perche de ravitaillement de l'aéronef en première position dans la file d'attente est allongé de DMIN à min(L2, L3-D2, L4-D2-D3).

De même, dans le cas des fractionnements des ravitaillements de deux aéronefs placés en troisième et deuxième positions dans la file d'attente, les premiers passages D31 et D21 à la perche de ravitaillement de ces deux aéronefs sont allongés de DMIN à une valeur DMAX telle que les conditions D1+2DMAX<L4 et D1+DMAX<L3. Dans le cas des fractionnements des ravitaillements de deux aéronefs placés en troisième et première positions dans la file d'attente, les premiers passages D31 et D11 à la perche de ravitaillement de ces deux aéronefs sont allongés de DMIN à une valeur DMAX telle que les conditions D2+2DMAX<L4, DMAX+D2<L3 et DMAX<L2. Dans le cas des fractionnements des ravitaillements de deux aéronefs placés en deuxième et première positions dans la file d'attente, les premiers passages D21 et D11 à la perche' de ravitaillement de ces deux aéronefs sont allongés de DMIN à une valeur DMAX telle que les conditions D3+2DMAX<L4,2DMAX<L3 et DMAX<L2.

De même, dans le cas des fractionnements des ravitaillements des trois aéronefs placés en première, deuxième et troisième positions dans la file d'attente, leurs premiers passages D31, D21 et D11 à la perche de ravitaillement sont allongés de DMIN à une valeur DMAX telle que les conditions 3DMAX<L4, 2DMAX<L3 et DMAX<L2.

Lorsque les ravitaillements de plusieurs aéronefs sont fractionnés, la recherche de la valeur commune maximum pour leurs premiers passages DMAX peut se faire par itérations, en partant de la valeur DMIN et en lui ajoutant de façon répétitive un incrément INC jusqu'à parvenir au non respect de l'une des conditions imposées par les autonomies des aéronefs.

Le procédé de gestion de ravitaillement en vol qui vient d'être décrit peut facilement être étendu aux ravitaillements de flottille composées de plus de quatre aéronefs, l'augmentation du nombre d'aéronefs de la flottille ne faisant qu'augmenter les possibilités de fractionnements des ravitaillements.

Une fois établi l'ordre de ravitaillement des aéronefs de la flottille et repérés les aéronefs dont les ravitaillements doivent être fractionnés, les temps et distances de ravitaillement pour les quantités de carburant demandées peuvent être évalués avec précision. Il est alors possible d'estimer les quantités de carburant dont disposeront effectivement les aéronefs de la flottille en fin de l'opération de ravitaillement et d'ajuster les quantités de carburants transférées aux aéronefs pour que ces quantités estimées correspondent aux quantités voulues. Cet ajustement, qui a des conséquences sur les temps et distances de ravitaillement peut se faire de manière itérative, jusqu'à parvenir à des écarts acceptables entre les demandes et les estimations des quantités de carburant mises à disposition.

## Revendications

1. Procédé de gestion du ravitaillement en vol d'une flottille (1) de n aéronefs A1,...., An à partir d'une même perche de ravitaillement d'un aéronef ravitailleur (2), permettant l'élaboration d'une séquence de ravitaillement à partir de la prise en compte d'un point de rendez-vous de ravitaillement P, du nombre n d'aéronefs de la flottille (1), des quantités de carburant Q1,...,Qn demandées par les aéronefs A1,....,An de la flottille (1) et des distances maxima L1,...,Ln franchissables par chaque aéronef de la flottille (1) dans l'attente d'un début de ravitaillement, ces distances maxima L1,..., Ln correspondant aux distances séparant le point de rendez-vous de ravitaillement P, sur la route suivie par l'aéronef ravitailleur (2), des points limites atteignables par les différents aéronefs de la flottille (1) sans ravitaillement et sans qu'ils puisent dans leurs réserves de sécurité de carburant, ledit procédé étant **caractérisé en ce qu'**il comporte les étapes suivantes :

    - prise en compte initiale d'une séquence arbitraire de ravitaillement définie par une mise en file d'attente des aéronefs de la flottille (1) selon un ordre arbitraire A1,..., An et un unique passage de chaque aéronef de la flottille (1) à la perche de ravitaillement,

- test de viabilité de la séquence de ravitaillement prise en compte consistant à exprimer, en distances D1,..., Dn à parcourir par l'aéronef ravitailleur (2), les temps nécessaires pour délivrer aux aéronefs de la flottille (1) les quantités de carburant prévues lors de leurs passages programmés à la perche de ravitaillement et à vérifier, en descendant la file d'attente, que chaque aéronef autre que celui en tête de la file d'attente, A2,...., An entamera son ravitaillement dans les délais, c'est-à-dire avant que l'aéronef ravitailleur (2) n'ait parcouru une distance supérieure à la distance maximum franchissable L2,..., Ln par l'aéronef considéré,
- en l'absence de constat d'aéronef entamant son ravitaillement hors délai, admettre la viabilité de la séquence de ravitaillement testée et l'adopter,
- en présence d'un constat d'aéronef entamant son ravitaillement hors délai, modifier la séquence de ravitaillement testée pour écourter l'attente de cet aéronef et tenter de le faire se ravitailler dans les délais, la modification de la séquence consistant à fractionner en deux passages, le ou les ravitaillements d'un ou plusieurs aéronefs qui précèdent dans la file d'attente l'aéronef concerné, un premier passage écourté à la perche de ravitaillement permettant à un aéronef de recevoir une quantité minimum de carburant augmentant suffisamment son autonomie pour qu'il puisse se replacer à la fin de la file d'attente et attendre un deuxième passage à la perche de ravitaillement pour un complément de carburant sans pour autant puiser dans sa réserve de carburant de sécurité, le ou les aéronefs dont le ravitaillement est fractionné en deux étant choisis de manière à minimiser le nombre de passages à la perche de ravitaillement, le choix portant d'abord sur l'aéronef, s'il existe, qui est placé en amont dans la file d'attente et dont le fractionnement du ravitaillement en deux passages à la perche de ravitaillement permet d'approcher au mieux, par valeur supérieure, le gain de temps recherché, puis sur deux aéronefs, s'ils existent, placés en amont dans la file d'attente dont les fractionnements des ravitaillements permettent d'approcher au mieux, par valeur supérieure le gain de temps recherché et ainsi de suite, une absence de solution dans le choix des aéronefs à ravitaillement fractionné conduisant à un constat d'impossibilité de ravitaillement de la flottille complète, tandis qu'une présence de solution conduit à une proposition de séquence de ravitaillement modifiée, et
- prendre en compte toute proposition de séquence de ravitaillement modifiée et tester sa viabilité en repartant à la deuxième étape du procédé.

**2.** Procédé selon la revendication 1, **caractérisé en ce qu'**il comporte une étape supplémentaire, en cas de test de viabilité négatif de la séquence de ravitaillement arbitraire prise en compte initialement, cette étape consistant à remplacer ladite séquence arbitraire de ravitaillement par une séquence de ravitaillement dite nominale, définie par un ordre de file d'attente correspondant à des quantités décroissantes de carburant demandées et par un unique passage de chaque aéronef de la flottille (1) à la perche de ravitaillement, l'aéronef placé en tête de la file d'attente étant celui ayant demandé la quantité de carburant la plus importante.

**3.** Procédé selon la revendication 1, **caractérisé en ce qu'**il comporte une étape supplémentaire, en cas de test de viabilité négatif de la séquence de ravitaillement arbitraire prise en compte initialement, cette étape consistant à remplacer ladite séquence arbitraire de ravitaillement par une séquence de ravitaillement, définie par un ordre de file d'attente correspondant à des distances maxima franchissables L1, L2,....,Ln croissantes et par un unique passage de chaque aéronef de la flottille (1) à la perche de ravitaillement, l'aéronef placé en tête de la file d'attente étant celui ayant la distance maximum franchissable la plus faible.

**4.** Procédé selon la revendication 1, **caractérisé en ce que**, en cas d'un test négatif de viabilité d'une séquence de ravitaillement dû au constat d'un aéronef de la flottille (1) entamant son ravitaillement hors délai, le choix du ou des aéronefs placés en amont dans la file d'attente dont le ravitaillement est fractionné, résulte d'essais virtuels systématiques pratiqués en remontant la file d'attente en prenant en compte un aéronef, puis deux dont celui procurant le gain de temps le plus important, puis trois dont les deux procurant le gain de temps le plus important et ainsi de suite.

**5.** Procédé selon la revendication 1, **caractérisé en ce que** la durée d'un premier passage écourté à la perche de ravitaillement, d'un ravitaillement fractionné est fixée à une même valeur DMIN pour tous les aéronefs de la flottille (1), valeur qui est progressivement augmentée, une fois que la séquence de ravitaillement a satisfait au test de viabilité, jusqu'à parvenir en limite d'autonomie pour l'un des aéronefs de la flottille (1).

**6.** Procédé selon la revendication 1, **caractérisé en ce que**, le choix des aéronefs de la flottille (1) dont le ravitaillement est fractionné résulte de la vérification du respect d'une succession de relations d'inégalité entre les distances de parcours D1,..., Dn nécessaires à l'aéronef ravitailleur (2) pour délivrer les quantités de carburant demandées au cours de chaque passage des aéronefs de la flottille (1) à la perche de ravitaillement et les distances maxima L1, L2,..., Ln franchissables par chaque aéronef de la flottille (1).

**7.** Procédé selon la revendication1, appliqué à une flottille de deux aéronefs, **caractérisé en ce qu'**il consiste à :

- admettre un ordre de file d'attente arbitraire pour les deux aéronefs de la flottille,
- vérifier si la distance maximum L2 franchissable par l'aéronef en deuxième position dans la file d'attente de ravitaillement est supérieure à la durée, exprimée en distance franchissable D1, nécessaire au ravitaillement en un passage à la perche de ravitaillement, de l'aéronef placé en première position dans la file d'attente
- si c'est le cas, la condition D1<L2 étant satisfaite, adopter la séquence de ravitaillement D1, D2, avec un seul passage par aéronef ravitaillé et
- si ce n'est pas le cas, la condition D1<L2 n'étant pas satisfaite, vérifier que la distance maximum L2 franchissable par l'aéronef placé en deuxième dans la file d'attente est supérieure à la durée minimum, exprimée en distance franchissable DMIN, d'un passage à la perche de ravitaillement,

    - si ce n'est pas le cas, la condition DMIN<L2 n'étant pas satisfaite, signaler l'impossibilité du ravitaillement avec l'ordre de file d'attente adopté, et
    - si c'est le cas, la condition D1 <L2 étant satisfaite, adopter la séquence de ravitaillement D11, D2, D12 avec un fractionnement en deux passages, du ravitaillement de l'aéronef en tête de file d'attente.

**8.** Procédé selon la revendication 7, **caractérisé en ce que** la durée du premier passage D11 de ravitaillement de l'aéronef en première position dans la file d'attente est prise égale à la distance maximum L2 franchissable par l'aéronef placé en deuxième position dans la file d'attente.

**9.** Procédé selon la revendication 1, appliqué à une flottille de trois aéronefs, **caractérisé en ce qu'**il consiste à :

- admettre un ordre de file d'attente de ravitaillement pour les trois aéronefs de la flottille correspondant à des quantités décroissantes de carburant demandées,
- vérifier si les distances maxima L2 et L3 franchissables par les aéronefs placés en deuxième et troisième positions dans la file d'attente sont supérieures aux durées D1, D1+D2, exprimées en distances franchissables, des ravitaillements en un passage à la perche de ravitaillement, du ou des aéronefs placés devant dans la file d'attente,
- si c'est le cas, les conditions D1<L2 et D1+D2<L3 étant satisfaites, adopter la séquence de ravitaillement D1, D2, D3 avec un seul passage à la perche de ravitaillement par aéronef ravitaillé,
- si ce n'est pas le cas, l'une au moins des conditions D1<L2 ou D1+D2<L3 n'étant pas satisfaite, vérifier que les distances maxima L2, L3 franchissables par les aéronefs n'occupant pas la tête de la file d'attente sont supérieures aux durées minima, exprimées en distance franchissable DMIN, d'un passage à la perche de ravitaillement de chacun des aéronefs placés devant dans la file d'attente,
- si ce n'est pas le cas, l'une des conditions DMIN<L2 ou 2DMIN<L3 n'étant pas satisfaite, signaler l'impossibilité du ravitaillement avec l'ordre de file d'attente adopté,
- si c'est le cas, les deux conditions DMIN<L2 et 2DMIN<L3 étant satisfaites, rechercher le ou les ravitaillements dont les fractionnements conduisent à une séquence de ravitaillement permettant de commencer les ravitaillements de tous les aéronefs de la flottille avant qu'ils n'aient parcouru leurs distances maxima franchissables tout en ne comportant qu'un nombre minimum de passages à la perche de ravitaillement,

ladite recherche du ou des ravitaillements à fractionner pour parvenir à commencer les ravitaillements des aéronefs avant qu'ils n'aient parcouru leurs distances maxima franchissables comportant les étapes successives suivantes :

- vérifier si les conditions D1<L2 et D1+DMIN<L3 sont remplies,
- si c'est le cas, adopter la séquence de ravitaillement D1, D21, D3, D22 avec un unique fractionnement en deux passages; du ravitaillement de l'aéronef placé en deuxième position dans la file d'attente,
- si ce n'est pas le cas, l'une des conditions D1<L2 ou D1+DMIN<L3 n'étant pas remplie, vérifier si la condition D2+DMIN<L3 est remplie,
- si la condition D2+DMIN<L3 est remplie, adopter la séquence de ravitaillement D11, D2, D3, D12 avec un unique fractionnement en deux passages du ravitaillement de l'aéronef en tête de file d'attente, et
- si la condition D2+DMIN<L3 n'est pas remplie, adopter la séquence de ravitaillement D11, D21, D3, D12, D22 avec des fractionnements en deux passages, des ravitaillements des aéronefs placés en première et deuxième positions dans la file d'attente.

**10.** Procédé selon la revendication 9, **caractérisé en ce que**, lors d'un aboutissement à la sélection de la séquence de ravitaillement D1, D21, D3, D22 avec un unique fractionnement en deux passages, du ravitaillement de l'aéronef en deuxième position dans la file d'attente, la durée du premier passage du ravitaillement de l'aéronef placé en deuxième position dans la file d'attente, exprimée en distance D21, est prise égale à la distance maximum L3 franchissable par l'aéronef placé en queue de file d'attente, diminuée de la distance D1 nécessaire au ravitaillement en un passage de l'aéronef placé en tête de file d'attente :

$$D21=L3-D1$$

la durée du deuxième passage du ravitaillement de l'aéronef placé en deuxième position dans la file d'attente exprimée en distance D22 étant prise égale à la durée nécessaire pour que la quantité de carburant transférée au total atteigne la quantité demandée :

$$D22=D2-D21$$

**11.** Procédé selon la revendication 9, **caractérisé en ce que**, lors d'un aboutissement à la sélection de la séquence de ravitaillement D11, D2, D3, D12 avec un unique fractionnement en deux passages, du ravitaillement de l'aéronef en première position dans la file d'attente, la durée du premier passage du ravitaillement de l'aéronef placé en première position dans la file d'attente, exprimée en distance D11, est prise égale au minimum de la distance maximum L2 franchissable par l'aéronef placé en deuxième position dans la file d'attente et de la distance maximum L3 franchissable par l'aéronef placé en troisième position de la file d'attente diminuée de la distance D2 nécessaire au ravitaillement en un passage de l'aéronef placé en deuxième position de file d'attente :

$$D11=\min(L2, L3-D2)$$

la durée du deuxième passage du ravitaillement de l'aéronef placé en première position dans la file d'attente exprimée en distance D12 étant prise égale à la durée nécessaire pour que la quantité de carburant transférée au total atteigne la quantité demandée :

$$D12=D1-D11$$

**12.** Procédé selon la revendication 9, **caractérisé en ce que**, lors d'un aboutissement à la sélection de la séquence de ravitaillement D11, D21, D3, D12, D22 avec des fractionnements en deux passages, des ravitaillements des aéronefs placés en première et deuxième positions dans la file d'attente, les durées des premiers passages des ravitaillements des aéronefs placés en première et deuxième positions dans la file d'attente, exprimées en distance D11, D21 sont prises égales à la durée DMIN augmentée itérativement d'un incrément INC jusqu'à parvenir en limite du respect des conditions $D11<L2$ et $D11+D21<L3$ imposées par les autonomies des aéronefs placés en deuxième et troisième positions dans la file d'attente, les durées des deuxièmes passages des ravitaillements des aéronefs placés en première et deuxième positions dans la file d'attente, exprimées en distance D12, D22 étant prises égales aux durées nécessaires pour que les quantités de carburant transférées au total atteignent les quantités demandées :

$$D12=D1-D11 \text{ et } D22=D2-D21$$

**13.** Procédé selon la revendication 1, appliqué à une flottille de quatre aéronefs, **caractérisé en ce qu'**il consiste à :

- admettre un ordre de file d'attente de ravitaillement pour les quatre aéronefs de la flottille correspondant à des quantités décroissantes de carburant demandées,
- vérifier si les distances maxima L2, L3 et L4 franchissables par les aéronefs placés en deuxième, troisième et quatrième positions dans la file d'attente sont supérieures aux durées D1, D1+D2, D1+D2+D3 exprimées en distances franchissables, des ravitaillements en un passage à la perche de ravitaillement, du ou des aéronefs placés devant dans la file d'attente,
- si c'est le cas, les conditions $D1<L2$, $D1+D2<L3$ et $D1+D2+D3<L4$ étant satisfaites, adopter la séquence de ravitaillement D1, D2, D3, D4 avec un seul passage par aéronef ravitaillé,

- si ce n'est pas le cas, l'une au moins des conditions D1<L2 ou D1+D2<L3 ou D1+D2+D3<L4 n'étant pas satisfaite, vérifier que les distances maxima L2, L3, L4 franchissables par les aéronefs n'occupant pas la tête de la file d'attente sont supérieures aux durées minima, exprimées en distance franchissable DMIN, d'un passage à la perche de ravitaillement de chacun des aéronefs placés devant dans la file d'attente,
- si ce n'est pas le cas, l'une des conditions DMIN<L2 ou 2DMIN<L3 ou 3DMIN<L4 n'étant pas satisfaite, signaler l'impossibilité du ravitaillement avec l'ordre de file d'attente adopté,
- si c'est le cas, les trois conditions DMIN<L2, 2DMIN<L3 et 3DMIN étant satisfaites, rechercher le ou les ravitaillements dont les fractionnements conduisent à une séquence de ravitaillement permettant de commencer les ravitaillements de tous les aéronefs de la flottille avant qu'ils n'aient parcouru leurs distances maxima franchissables tout en ne comportant qu'un nombre minimum de passages à la perche de ravitaillement,

ladite recherche du ou des ravitaillements à fractionner pour parvenir à commencer les ravitaillements des aéronefs avant qu'ils n'aient parcouru leurs distances maxima franchissables comportant les étapes successives suivantes :

- vérifier si les conditions D1<L2 et D1+D2<L3 et D1+D2+DMIN<L4 sont remplies,
- si c'est le cas, adopter la séquence de ravitaillement D1, D2, D31, D4, D32 avec un unique fractionnement en deux passages, du ravitaillement de l'aéronef placé en troisième position dans la file d'attente,
- si ce n'est pas le cas, l'une des conditions D1<L2 ou D1+D2<L3 ou D1+D2+Dmin<L4 n'étant pas remplie, vérifier si les conditions D1<L2, D1+DMIN<L3 et D1+D3+DMIN<L4 sont remplies,
- si c'est le cas, adopter la séquence de ravitaillement D1, D21, D3, D4, D22 avec un unique fractionnement en deux passages, du ravitaillement de l'aéronef placé en deuxième position dans la file d'attente,
- si ce n'est pas le cas, l'une des conditions D1<L2 ou D1+DMIN<L3 ou D1+D3+DMIN<L4 n'étant pas remplie, vérifier si les conditions D2+DMIN<L3 et D2+D3+DMIN<L4 sont remplies,
- si c'est le cas, adopter la séquence de ravitaillement D11, D2, D3, D12 avec un unique fractionnement en deux passages, du ravitaillement de l'aéronef placé en première position dans la file d'attente,
- si ce n'est pas le cas, l'une des conditions D2+DMIN<L3 ou D2+D3+DMIN<L4 n'étant pas remplie, vérifier si les conditions D1<L2, D1+DMIN<L3 et D1+2DMIN<L4 sont remplies,
- si c'est le cas, adopter la séquence de ravitaillement D1, D21, D31, D4, D22, D32 avec des fractionnements en deux passages, des ravitaillements des aéronefs placés en deuxième et troisième positions dans la file d'attente,
- si ce n'est pas le cas, l'une des conditions D1<L2 ou D1+DMIN<L3 ou D1+2DMIN<L4 n'étant pas remplie, vérifier si les conditions D2+DMIN<L3 et D2+2DMIN<L4 sont remplies,
- si c'est le cas, adopter la séquence de ravitaillement D11, D2, D31, D4, D12, D32 avec des fractionnements en deux passages, des ravitaillements des aéronefs placés en première et troisième positions dans la file d'attente,
- si ce n'est pas le cas, l'une des conditions D2+DMIN<L3 ou D2+2DMIN<L4 n'étant pas remplie, vérifier si la condition D3+2DMIN<L4 est remplie,
- si la condition D3+2DMIN<L4 est remplie, adopter la séquence de ravitaillement D11, D21, D3, D4, D12, D22 avec des fractionnements en deux passages, des ravitaillements des aéronefs placés en première et deuxième positions dans la file d'attente,
- si la condition D3+2DMIN<L4 n'est pas remplie, adopter la séquence de ravitaillement D11, D21, D31, D4, D12, D22, D31 avec des fractionnements en deux passages, des ravitaillements des aéronefs placés en première, deuxième et troisième positions dans la file d'attente.

**14.** Procédé selon la revendication 13, **caractérisé en ce que**, lors d'un aboutissement à la sélection de la séquence de ravitaillement D1, D2, D31, D4, D32 avec un unique fractionnement en deux passages, du ravitaillement de l'aéronef en troisième position dans la file d'attente, la durée du premier passage du ravitaillement de l'aéronef placé en troisième position dans la file d'attente, exprimée en distance D31, est prise égale à la distance maximum L4 franchissable par l'aéronef placé en queue de file d'attente, diminuée des distances D1 et D2 nécessaires au ravitaillement en un passage des aéronefs placés en première et deuxième positions dans la file d'attente :

$$D31=L4-D1-D2$$

la durée du deuxième passage du ravitaillement de l'aéronef placé en troisième position dans la file d'attente, exprimée en distance D32, étant prise égale à la durée nécessaire pour que la quantité de carburant transférée au total atteigne la quantité demandée :

$$D32=D3-D31$$

**15.** Procédé selon la revendication 13, **caractérisé en ce que**, lors d'un aboutissement à la sélection de la séquence de ravitaillement D1, D21, D3, D4, D22 avec un unique fractionnement en deux passages du ravitaillement de l'aéronef en deuxième position dans la file d'attente, la durée du premier passage du ravitaillement de l'aéronef placé en deuxième position dans la file d'attente, exprimée en distance D21, est prise égale au minimum de la distance maximum L4 franchissable par l'aéronef placé en queue de file d'attente, diminuée des distances D1 et D3 nécessaires aux ravitaillements en un passage, des aéronefs placés en première et troisième positions dans la file d'attente, et de la distance maximum L3 franchissable par l'aéronef placé en troisième position dans la file d'attente, diminuée de la distance D1 nécessaire au ravitaillement en un passage, de l'aéronef placé en tête de file d'attente :

$$D21=\min(L3-D1, L4-D1-D3)$$

la durée du deuxième passage du ravitaillement de l'aéronef placé en deuxième position dans la file d'attente, exprimée en distance D22, étant prise égale à la durée nécessaire pour que la quantité de carburant transférée au total atteigne la quantité demandée :

$$D22=D2-D21$$

**16.** Procédé selon la revendication 13, **caractérisé en ce que**, lors d'un aboutissement à la sélection de la séquence de ravitaillement D11, D2, D3, D4, D12 avec un unique fractionnement en deux passages du ravitaillement de l'aéronef en première position dans la file d'attente, la durée du premier passage du ravitaillement de l'aéronef placé en première position dans la file d'attente, exprimée en distance D11, est prise égale au minimum de la distance maximum L2 franchissable par l'aéronef placé en deuxième position dans la file d'attente, de la distance maximum L4 franchissable par l'aéronef placé en queue de file d'attente, diminuée des distances D2 et D3 nécessaires aux ravitaillements en un passage des aéronefs placés en deuxième et troisième positions dans la file d'attente, et de la distance maximum L3 franchissable par l'aéronef placé en troisième position dans la file d'attente, diminuée de la distance D2 nécessaire au ravitaillement en un passage de l'aéronef placé en deuxième position de la file d'attente :

$$D11=\min(L2, L3-D2, L4-D2-D3)$$

la durée du deuxième passage du ravitaillement de l'aéronef placé en première position dans la file d'attente, exprimée en distance D12, étant prise égale à la durée nécessaire pour que la quantité de carburant transférée au total atteigne la quantité demandée :

$$D12=D1-D11$$

**17.** Procédé selon la revendication 13, **caractérisé en ce que**, lors d'un aboutissement à la sélection de la séquence de ravitaillement D1, D21, D31, D4, D22, D32 avec des fractionnements en deux passages, des ravitaillements des aéronefs placés en deuxième et troisième positions dans la file d'attente, les durées des premiers passages des ravitaillements des aéronefs placés en deuxième et troisième positions dans la file d'attente, exprimées en distance D21, D31 sont prises égales à la durée DMIN augmentée itérativement d'un incrément INC jusqu'à parvenir en limite du respect des conditions $D1+D21<L3$ et $D1+D21+D31<L4$ imposées par les autonomies des aéronefs placés en troisième et quatrième positions dans la file d'attente, les durées des deuxièmes passages des ravitaillements des aéronefs placés en deuxième et troisième positions dans la file d'attente, exprimées en distance D22, D32 étant prises égales aux durées nécessaires pour que les quantités de carburant transférées au total atteignent les quantités demandées :

$$D22=D2-D21 \text{ et } D32=D3-D31$$

**18.** Procédé selon la revendication 13, **caractérisé en ce que**, lors d'un aboutissement à la sélection de la séquence de ravitaillement D11, D2, D31, D4, D12, D32 avec des fractionnements en deux passages des ravitaillements des aéronefs placés en première et troisième positions dans la file d'attente, les durées des premiers passages des ravitaillements des aéronefs placés en première et troisième positions dans la file d'attente, exprimées en distance D11, D31 sont prises égales à la durée DMIN augmentée itérativement d'un incrément INC jusqu'à parvenir en limite du respect des conditions D11<L2, D11+D2<L3 et D11+D2+D31<L4 imposées par les autonomies des aéronefs placés en deuxième, troisième et quatrième positions dans la file d'attente, les durées des deuxièmes passages des ravitaillements des aéronefs placés en première et troisième positions dans la file d'attente, exprimées en distance D12, D32 étant prises égales aux durées nécessaires pour que les quantités de carburant transférées au total atteignent les quantités demandées :

D12=D1-D11 et D32=D3-D31

**19.** Procédé selon la revendication 13, **caractérisé en ce que**, lors d'un aboutissement à la sélection de la séquence de ravitaillement D11, D21, D3, D4, D12, D22 avec des fractionnements en deux passages, des ravitaillements des aéronefs placés en première et deuxième positions dans la file d'attente, les durées des premiers passages des ravitaillements des aéronefs placés en première et deuxième positions dans la file d'attente, exprimées en distance D11, D21 sont prises égales à la durée DMIN augmentée itérativement d'un incrément INC jusqu'à parvenir en limite du respect des conditions D11<L2, D11+D21<L3 et D11+D21+D3<L4 imposées par les autonomies des aéronefs placés en deuxième, troisième et quatrième positions dans la file d'attente, les durées des deuxièmes passages des ravitaillements des aéronefs placés en première et troisième positions dans la file d'attente, exprimées en distance D12, D32 étant prises égales aux durées nécessaires pour que les quantités de carburant transférées au total atteignent les quantités demandées :

D12=D1-D11 et D22=D2-D21

**20.** Procédé selon la revendication 13, **caractérisé en ce que**, lors d'un aboutissement à la sélection de la séquence de ravitaillement D11, D21, D31, D4, D12, D21, D32 avec des fractionnements en deux passages, des ravitaillements des aéronefs placés en première, deuxième et troisième positions dans la file d'attente, les durées des premiers passages des ravitaillements des aéronefs placés en première, deuxième et troisième positions dans la file d'attente, exprimées en distance D11, D21, D31 sont prises égales à la durée DMIN augmentée itérativement d'un incrément INC jusqu'à parvenir en limite du respect des conditions D11<L2, D11+D21<L3 et D11+D21+D31<L4 imposées par les autonomies des aéronefs placés en deuxième, troisième et quatrième positions dans la file d'attente, les durées des deuxièmes passages des ravitaillements des aéronefs placés en première, deuxième et troisième positions dans la file d'attente, exprimées en distance D12, D22, D32 étant prises égales aux durées nécessaires pour que les quantités de carburant transférées au total atteignent les quantités demandées :

D12=D1-D11, D22=D2-D21 et D32=D3-D31

## Patentansprüche

**1.** Verfahren zur Verwaltung der Luftbetankung einer Flottille (1) von n Luftfahrzeugen A1, ..., An ausgehend von dem gleichen Betankungsausleger eines Tankerluftfahrzeugs (2), das die Ausarbeitung einer Betankungsreihenfolge ausgehend von der Erfassung eines Betankungs-Treffpunkts P, von der Anzahl n von Luftfahrzeugen der Flottille (1), von den von den Luftfahrzeugen A1, ..., An der Flottille (1) geforderten Treibstoffmengen Q1, ... Qn, und von den maximalen Strecken L1, ..., Ln, die von jedem Luftfahrzeug der Flottille (1) in Erwartung des Beginns eines Betankens überwunden werden können, ermöglicht, wobei diese maximalen Strecken L1, ..., Ln den Strekken entsprechen, die den Betankungs-Treffpunkt P auf der vom Tankerluftfahrzeug (2) verfolgten Route von den Grenzpunkten trennen, die von den verschiedenen Luftfahrzeugen der Flottille (1) ohne Auftanken und ohne Angreifen ihrer Treibstoff-Sicherheitsreserven erreicht werden können, wobei das Verfahren **dadurch gekennzeichnet ist, dass** es die folgenden Schritte aufweist:

- eine ursprüngliche Erfassung einer willkürlichen Betankungsreihenfolge, die durch ein Einordnen der Luftfahrzeuge der Flottille (1) in eine Warteschlange gemäß einer willkürlichen Anordnung A1, ..., An und einen einzigen Durchgang jedes Luftfahrzeugs der Flottille (1) am Betankungsausleger definiert wird,

- einen Durchführbarkeitstest der erfassten Betankungsreihenfolge, der darin besteht, in vom Tankerluftfahrzeug (2) zurückzulegenden Strecken D1, ..., Dn die Zeiten auszudrücken, die notwendig sind, um an die Luftfahrzeuge der Flottille (1) die bei ihren programmierten Durchgängen am Betankungsausleger vorgesehenen Treibstoffmengen zu liefern, und in Abwärtsrichtung der Warteschlange zu prüfen, ob jedes andere als das erste Luftfahrzeug in der Warteschlange A2, ..., An seine Betankung fristgemäß beginnt, d.h., ehe das Tankerluftfahrzeug (2) eine Strecke zurückgelegt hat, die größer ist als die vom betrachteten Luftfahrzeug maximal überwindbare Strecke L2, ..., Ln,
- in Abwesenheit der Feststellung eines Luftfahrzeugs, das seine Betankung nicht fristgemäß einleitet, Anerkennung der Durchführbarkeit der getesteten Betankungsreihenfolge und Übernahme dieser Reihenfolge,
- in Gegenwart einer Feststellung eines Luftfahrzeugs, das seine Betankung nicht fristgemäß einleitet, Ändern der getesteten Betankungsreihenfolge, um die Wartezeit dieses Luftfahrzeugs abzukürzen und zu versuchen, es fristgemäß zu betanken, wobei die Änderung der Reihenfolge darin besteht, das Betanken oder die Betankungen eines oder mehrerer in der Warteschlange vor dem betroffenen Luftfahrzeug befindlicher Luftfahrzeuge in zwei Durchgänge aufzuteilen, wobei ein erster verkürzter Durchgang am Betankungsausleger es einem Luftfahrzeug ermöglicht, eine Mindest-Treibstoffmenge aufzunehmen, die seine Autonomie ausreichend erhöht, damit es an das Ende der Warteschlange gehen und einen zweiten Durchgang am Betankungsausleger für zusätzlichen Treibstoff abwarten kann, ohne deswegen seine Treibstoff-Sicherheitsreserve anzugreifen, wobei das oder die Luftfahrzeuge, deren Betankung zweigeteilt wird, so gewählt werden, dass die Anzahl von Durchgängen am Betankungsausleger minimiert wird, wobei die Wahl zunächst auf das Luftfahrzeug, falls vorhanden, das sich in der Warteschlange vorne befindet und dessen Aufteilung der Betankung in zwei Durchgänge am Betankungsausleger es ermöglicht, sich dem gesuchten größtmöglichen Zeitgewinn am besten anzunähern, und dann auf zwei Luftfahrzeuge fällt, falls vorhanden, die sich in der Warteschlange vorne befinden, deren Aufteilungen der Betankungen es ermöglichen, sich am besten dem gesuchten größtmöglichen Zeitgewinn anzunähern, und so weiter, wobei die Abwesenheit einer Lösung bei der Wahl der Luftfahrzeuge mit aufgeteilter Betankung zur Feststellung der nicht möglichen Betankung der ganzen Flottille führt, während das Vorhandensein einer Lösung zum Vorschlag einer geänderten Betankungsreihenfolge führt, und
- Erfassung jedes Vorschlags einer geänderten Betankungsreihenfolge und Testen seiner Durchführbarkeit, indem mit dem zweiten Schritt des Verfahrens begonnen wird.

2. Verfahren nach Anspruch 1, **dadurch gekennzeichnet, dass** es im Fall eines negativen Durchführungstests der ursprünglich erfassten willkürlichen Betankungsreihenfolge einen zusätzlichen Schritt aufweist, wobei dieser Schritt darin besteht, die willkürliche Betankungsreihenfolge durch eine so genannte nominale Betankungsreihenfolge zu ersetzen, die durch eine Anordnung der Warteschlange, die abnehmenden geforderten Treibstoffmengen entspricht, und durch einen einzigen Durchgang jedes Luftfahrzeugs der Flottille (1) am Betankungsausleger definiert wird, wobei das am Kopf der Warteschlange befindliche Luftfahrzeug dasjenige ist, das die größte Treibstoffmenge gefordert hat.

3. Verfahren nach Anspruch 1, **dadurch gekennzeichnet, dass** es im Fall eines negativen Durchführungstests der ursprünglich erfassten willkürlichen Betankungsreihenfolge einen zusätzlichen Schritt aufweist, wobei dieser Schritt darin besteht, die willkürliche Betankungsreihenfolge durch eine Betankungsreihenfolge zu ersetzen, die durch eine Warteschlangenanordnung entsprechend zunehmenden maximal überwindbaren Strecken L1, L2, ..., Ln und durch einen einzigen Durchgang jedes Luftfahrzeugs der Flottille (1) am Betankungsausleger definiert wird, wobei das am Kopf der Warteschlange befindliche Luftfahrzeug dasjenige ist, das die kürzeste maximal überwindbare Strecke aufweist.

4. Verfahren nach Anspruch 1, **dadurch gekennzeichnet, dass** im Fall eines negativen Durchführungstests einer Betankungsreihenfolge aufgrund der Feststellung, dass ein Luftfahrzeug der Flottille (1) seine Betankung nicht fristgemäß einleitet, die Wahl des oder der vorne in der Warteschlange befindlichen Luftfahrzeuge, deren Betankung aufgeteilt wird, auf systematischen virtuellen Tests beruht, die in Aufwärtsrichtung der Warteschlange durchgeführt werden, indem ein Luftfahrzeug, und dann zwei, darunter dasjenige, das den größten Zeitgewinn verschafft, und dann drei berücksichtigt werden, darunter die beiden, die den größten Zeitgewinn verschaffen, und so weiter.

5. Verfahren nach Anspruch 1, **dadurch gekennzeichnet, dass** die Dauer eines ersten verkürzten Durchgangs am Betankungsausleger bei einer aufgeteilten Betankung für alle Luftfahrzeuge der Flottille (1) auf den gleichen Wert DMIN festgelegt wird, ein Wert, der progressiv erhöht wird, sobald die Betankungsreihenfolge den Durchführbarkeitstest bestanden hat, bis zum Erreichen der Autonomiegrenze eines der Luftfahrzeuge der Flottille (1).

**6.** Verfahren nach Anspruch 1, **dadurch gekennzeichnet, dass** die Wahl der Luftfahrzeuge der Flottille (1), deren Betankung aufgeteilt wird, aus der Überprüfung der Beachtung einer Folge von Ungleichheitsbeziehungen zwischen den Streckenentfernungen D1, ... Dn, die für das Tankerluftfahrzeug (2) notwendig sind, um bei jedem Durchgang der Luftfahrzeuge der Flottille (1) am Betankungsausleger die geforderten Treibstoffmengen zu liefern, und den maximalen Strecken L1, L2, ... Ln resultiert, die von jedem Luftfahrzeug der Flottille (1) überwunden werden können.

**7.** Verfahren nach Anspruch 1 in Anwendung auf eine Flottille von zwei Luftfahrzeugen, **dadurch gekennzeichnet, dass** es darin besteht:

- eine willkürliche Warteschlangenanordnung für die beiden Luftfahrzeuge der Flottille zuzulassen,
- zu überprüfen, ob die von dem in der Betankungs-Warteschlange an zweiter Stelle befindlichen Luftfahrzeug maximal überwindbare Strecke L2 größer ist als die Dauer, ausgedrückt als überwindbare Strecke D1, die für das Betanken des in der Warteschlange an erster Stelle befindlichen Luftfahrzeugs am Betankungsausleger in einem Durchgang notwendig ist,
- wenn dies der Fall ist, da die Bedingung D1<L2 erfüllt ist, Übernahme der Betankungsreihenfolge D1, D2 mit einem einzigen Durchgang pro betanktem Luftfahrzeug, und
- wenn dies nicht der Fall ist, da die Bedingung D1<D2 nicht erfüllt ist, Überprüfung, ob die von dem in der Warteschlange an zweiter Stelle befindlichen Luftfahrzeug maximal überwindbare Strecke L2 größer ist als die Mindestdauer, ausgedrückt als überwindbare Strecke DMIN, eines Durchgangs am Betankungsausleger,
- wenn dies nicht der Fall ist, da die Bedingung DMIN<L2 nicht erfüllt ist, Anzeige der Unmöglichkeit des Betankens mit der übernommenen Warteschlangenanordnung, und
- wenn dies der Fall ist, da die Bedingung D1<L2 erfüllt ist, Übernahme der Betankungsreihenfolge D11, D2, D12 mit einer Aufteilung des Betankens des Luftfahrzeugs am Kopf der Warteschlange in zwei Durchgänge.

**8.** Verfahren nach Anspruch 7, **dadurch gekennzeichnet, dass** die Dauer des ersten Durchgangs D11 des Betankens des in der Warteschlange an erster Stelle befindlichen Luftfahrzeugs gleich der von dem in der Warteschlange an zweiter Stelle befindlichen Luftfahrzeug maximal überwindbaren Strecke L2 genommen wird.

**9.** Verfahren nach Anspruch 1 in Anwendung auf eine Flottille von drei Luftfahrzeugen, **dadurch gekennzeichnet, dass** es darin besteht:

- eine Warteschlangenanordnung für die Betankung der drei Luftfahrzeuge der Flottille zuzulassen, die abnehmenden geforderten Treibstoffmengen entspricht,
- zu überprüfen, ob die von den in der Betankungs-Warteschlange an zweiter und dritter Stelle befindlichen Luftfahrzeugen maximal überwindbaren Strecken L2 und L3 größer sind als die Dauern D1, D1+D2, ausgedrückt als überwindbare Strecken, des Betankens des oder der vorne in der Warteschlange befindlichen Luftfahrzeuge am Betankungsausleger in einem Durchgang,
- wenn dies der Fall ist, da die Bedingungen D1<L2 und D1+D2<L3 erfüllt sind, Übernahme der Betankungsreihenfolge D1, D2, D3 mit einem einzigen Durchgang pro betanktem Luftfahrzeug am Betankungsausleger,
- wenn dies nicht der Fall ist, da mindestens eine der Bedingungen D1<L2 oder D1+D2<L3 nicht erfüllt ist, Überprüfen, ob die von den nicht am Kopf der Warteschlange befindlichen Luftfahrzeugen maximal überwindbaren Strecken L2, L3 größer sind als die Mindestdauern, ausgedrückt als überwindbare Strecke DMIN, eines Durchgangs jedes der vorne in der Warteschlange befindlichen Luftfahrzeuge am Betankungsausleger,
- wenn dies nicht der Fall ist, da eine der Bedingungen DMIN<L2 oder 2DMIN<L3 nicht erfüllt ist, Anzeige der Unmöglichkeit des Betankens mit der übernommenen Warteschlangenanordnung,
- wenn dies der Fall ist, da die beiden Bedingungen DMIN<L2 und 2DMIN<L3 erfüllt sind, Suche nach der oder den Betankung(en), deren Aufteilungen zu einer Betankungsreihenfolge führen, die es ermöglicht, die Betankungen aller Luftfahrzeuge der Flottille zu beginnen, ehe sie ihre maximal überwindbaren Strecken zurückgelegt haben, und die gleichzeitig nur eine Mindestanzahl von Durchgängen am Betankungsausleger aufweist,

wobei die Suche nach der oder den aufzuteilenden Betankung(en), um zu erreichen, dass die Betankungen der Luftfahrzeuge begonnen werden, ehe sie ihre maximal überwindbaren Strecken zurückgelegt haben, die folgenden aufeinander folgenden Schritte aufweist:

- Überprüfen, ob die Bedingungen D1<L2 und D1+DMIN<L3 erfüllt sind,
- wenn dies der Fall ist, Übernahme der Betankungsreihenfolge D1, D21, D3, D22 mit einer einzigen Aufteilung in zwei Durchgänge der Betankung des Luftfahrzeugs, das sich in der Warteschlange an zweiter Stelle befindet,

- wenn dies nicht der Fall ist, da eine der Bedingungen D1<L2 oder D1+DMIN<L3 nicht erfüllt ist, Überprüfen, ob die Bedingung D2+DMIN<L3 erfüllt ist,
- wenn die Bedingung D2+DMIN<L3 erfüllt ist, Übernahme der Betankungsreihenfolge D11, D2, D3, D12 mit einer einzigen Aufteilung in zwei Durchgänge des Betankens des am Kopf der Warteschlange befindlichen Luftfahrzeugs, und
- wenn die Bedingung D2+DMIN<L3 nicht erfüllt ist, Übernahme der Betankungsreihenfolge D11, D21, D3, D12, D22 mit Aufteilungen in zwei Durchgänge der Betankungen der in der Warteschlange an erster und zweiter Stelle befindlichen Luftfahrzeuge.

**10.** Verfahren nach Anspruch 9, **dadurch gekennzeichnet, dass** bei Zustandekommen der Wahl der Betankungsreihenfolge D1, D21, D3, D22 mit einer einzigen Aufteilung in zwei Durchgänge des Betankens des in der Warteschlange an zweiter Stelle befindlichen Luftfahrzeugs die Dauer des ersten Durchgangs des Betankens des in der Warteschlange an zweiter Stelle befindlichen Luftfahrzeugs, ausgedrückt als Strecke D21, gleich der von dem am Ende der Warteschlange befindlichen Luftfahrzeug maximal überwindbaren Strecke L3 genommen wird, verringert um die Strecke D1, die für das Betanken des am Kopf der Warteschlange befindlichen Luftfahrzeugs in einem Durchgang notwendig ist:

$$D21=L3-D1$$

wobei die Dauer des zweiten Durchgangs des Betankens des in der Warteschlange an zweiter Stelle befindlichen Luftfahrzeugs, ausgedrückt als Strecke D22, gleich der Dauer genommen wird, die notwendig ist, damit die insgesamt übertragene Treibstoffmenge die geforderte Menge erreicht:

$$D22=D2-D21$$

**11.** Verfahren nach Anspruch 9, **dadurch gekennzeichnet, dass** bei Zustandekommen der Wahl der Betankungsreihenfolge D11, D2, D3, D12 mit einer einzigen Aufteilung in zwei Durchgänge der Betankung des in der Warteschlange an erster Stelle befindlichen Luftfahrzeugs die Dauer des ersten Durchgangs des Betankens des in der Warteschlange an erster Stelle befindlichen Luftfahrzeugs, ausgedrückt als Strecke D11, gleich dem Minimum der von dem in der Warteschlange an zweiter Stelle befindlichen Luftfahrzeug maximal überwindbaren Strecke L2 und der von dem in der Warteschlange an dritter Stelle befindlichen Luftfahrzeug maximal überwindbaren Strecke L3 genommen wird, verringert um die Strecke D2, die für das Betanken des in der Warteschlange an zweiter Stelle befindlichen Luftfahrzeugs in einem Durchgang notwendig ist:

$$D11=\min(L2, L3-D2)$$

wobei die Dauer des zweiten Durchgangs des Betankens des in der Warteschlange an erster Stelle befindlichen Luftfahrzeugs, ausgedrückt als Strecke D12, gleich der Dauer genommen wird, die notwendig ist, damit die insgesamt übertragene Treibstoffmenge die geforderte Menge erreicht:

$$D12=D1-D11$$

**12.** Verfahren nach Anspruch 9, **dadurch gekennzeichnet, dass** bei Zustandekommen der Wahl der Betankungsreihenfolge D11, D21, D3, D12, D22 mit Aufteilungen in zwei Durchgänge der Betankungen der in der Warteschlange an erster und zweiter Stelle befindlichen Luftfahrzeuge die Dauern der ersten Durchgänge des Betankens der in der Warteschlange an erster und zweiter Stelle befindlichen Luftfahrzeuge, ausgedrückt als Strecken D11, D21, gleich der Dauer DMIN genommen werden, iterativ erhöht um ein Inkrement INC, bis zum Erreichen der Grenze der Beachtung der Bedingungen D11<L2 und D11+D21<L3, die von den Autonomien der in der Warteschlange an zweiter und dritter Stelle befindlichen Luftfahrzeuge aufgezwungen werden, wobei die Dauern der zweiten Durchgänge beim Betanken der in der Warteschlange an erster und zweiter Stelle befindlichen Luftfahrzeuge, ausgedrückt als Strecken D12, D22, gleich den Dauern genommen werden, die notwendig sind, damit die insgesamt übertragenen Treibstoffmengen die geforderten Mengen erreichen:

D12=D1-D11 und D22=D2-D21

**13.** Verfahren nach Anspruch 1 in Anwendung auf eine Flottille von vier Luftfahrzeugen, **dadurch gekennzeichnet, dass** es darin besteht:

- eine Warteschlangenanordnung für die Betankung der vier Luftfahrzeuge der Flottille zuzulassen, die abnehmenden geforderten Treibstoffmengen entspricht,
- zu überprüfen, ob die von den in der Betankungs-Warteschlange an zweiter, dritter und vierter Stelle befindlichen Luftfahrzeugen maximal überwindbaren Strecken L2, L3 und L4 größer sind als die Dauern D1, D1+D2, D1+D21+D3, ausgedrückt als überwindbare Strecken, des Betankens des oder der vorne in der Warteschlange befindlichen Luftfahrzeugs/Luftfahrzeuge am Betankungsausleger in einem Durchgang,
- wenn dies der Fall ist, da die Bedingungen D1<L2, D1+D2<L3 und D1+D2+D3<L4 erfüllt sind, Übernahme der Betankungsreihenfolge D1, D2, D3, D4 mit einem einzigen Durchgang pro betanktem Luftfahrzeug,
- wenn dies nicht der Fall ist, da mindestens eine der Bedingungen D1<L2 oder D1+D2<L3 oder D1+D2+D3<L4 nicht erfüllt ist, Überprüfen, ob die von den nicht am Kopf der Warteschlange befindlichen Luftfahrzeugen maximal überwindbaren Strecken L2, L3, L4 größer sind als die Mindestdauern, ausgedrückt als überwindbare Strecke DMIN, eines Durchgangs jedes dieser vorne in der Warteschlange befindlichen Luftfahrzeuge am Betankungsausleger,
- wenn dies nicht der Fall ist, da eine der Bedingungen DMIN<L2 oder 2DMIN<L3 oder 3DMIN<L4 nicht erfüllt ist, Anzeige der Unmöglichkeit des Betankens mit der übernommenen Warteschlangenanordnung,
- wenn dies der Fall ist, da die drei Bedingungen DMIN<L2, 2DMIN<L3 und 3DMIN<L4 erfüllt sind, Suche nach der oder den Betankung(en), deren Aufteilungen zu einer Betankungsreihenfolge führen, die es ermöglicht, die Betankungen aller Luftfahrzeuge der Flottille zu beginnen, ehe sie ihre maximal überwindbaren Strecken zurückgelegt haben, und die gleichzeitig nur eine Mindestanzahl von Durchgängen am Betankungsausleger aufweist,

wobei die Suche nach der oder den aufzuteilenden Betankung(en), um zu erreichen, dass die Betankungen der Luftfahrzeuge begonnen werden, ehe sie ihre maximal überwindbaren Strecken zurückgelegt haben, die folgenden aufeinander folgenden Schritte aufweist:

- Überprüfen, ob die Bedingungen D1<L2 und D1+D2<L3 und D1+D2+DMIN<L4 erfüllt sind,
- wenn dies der Fall ist, Übernahme der Betankungsreihenfolge D1, D2, D31, D4, D32 mit einer einzigen Aufteilung in zwei Durchgänge der Betankung des in der Warteschlange an dritter Stelle befindlichen Luftfahrzeugs,
- wenn dies nicht der Fall ist, da eine der Bedingungen D1<L2 oder D1+D2<L3 oder D1+D2+DMIN<L4 nicht erfüllt ist, Überprüfen, ob die Bedingungen D1<L2, D1+DMIN<L3 und D1+D3+DMIN<L4 erfüllt sind,
- wenn dies der Fall ist, Übernahme der Betankungsreihenfolge D1, D21, D3, D4, D22 mit einer einzigen Aufteilung in zwei Durchgänge des Betankens des in der Warteschlange an zweiter Stelle befindlichen Luftfahrzeugs,
- wenn dies nicht der Fall ist, da eine der Bedingungen D1<L2 oder D1+DMIN<L3 oder D1+D3+DMIN<L4 nicht erfüllt ist, Überprüfen, ob die Bedingungen D2+DMIN<L3 und D2+D3+DMIN<L4 erfüllt sind,
- wenn dies der Fall ist, Übernahme der Betankungsreihenfolge D11, D2, D3, D12 mit einer einzigen Aufteilung in zwei Durchgänge der Betankung des in der Warteschlange an erster Stelle befindlichen Luftfahrzeugs,
- wenn dies nicht der Fall ist, da eine der Bedingungen D2+DMIN<L3 oder D2+D3+DMIN<L4 nicht erfüllt ist, Überprüfen, ob die Bedingungen D1<L2, D1+DMIN<L3 und D1+2DMIN<L4 erfüllt sind,
- wenn dies der Fall ist, Übernahme der Betankungsreihenfolge D1, D21, D31, D4, D22, D32 mit Aufteilungen in zwei Durchgänge der Betankungen der in der Warteschlange an zweiter und dritter Stelle befindlichen Luftfahrzeuge,
- wenn dies nicht der Fall ist, da eine der Bedingungen D1<L2 oder D1+DMIN<L3 oder D1+2DMIN<L4 nicht erfüllt ist, Überprüfen, ob die Bedingungen D2+DMIN<L3 und D2+2DMIN<L4 erfüllt sind,
- wenn dies der Fall ist, Übernahme der Betankungsreihenfolge D11, D2, D31, D4, D12, D32 mit Aufteilungen in zwei Durchgänge des Betankens der in der Warteschlange an erster und dritter Stelle befindlichen Luftfahrzeuge,
- wenn dies nicht der Fall ist, da eine der Bedingungen D2+DMIN<L3 oder D2+2DMIN<L4 nicht erfüllt ist, Überprüfen, ob die Bedingung D3+2DMIN<L4 erfüllt ist,
- wenn die Bedingung D3+2DMIN<L4 erfüllt ist, Übernahme der Betankungsreihenfolge D11, D21, D3, D4, D12, D22 mit Aufteilungen in zwei Durchgänge der Betankungen der in der Warteschlange an erster und zweiter Stelle befindlichen Luftfahrzeuge,

- wenn die Bedingung D3+2DMIN<L4 nicht erfüllt ist, Übernahme der Betankungsreihenfolge D11, D21, D31, D4, D12, D22, D31 mit Aufteilungen in zwei Durchgänge der Betankungen der in der Warteschlange an erster, zweiter und dritter Stelle befindlichen Luftfahrzeuge.

**14.** Verfahren nach Anspruch 13, **dadurch gekennzeichnet, dass** bei Zustandekommen der Wahl der Betankungsreihenfolge D1, D2, D31, D4, D32 mit einer einzigen Aufteilung in zwei Durchgänge des Betankens des in der Warteschlange an dritter Stelle befindlichen Luftfahrzeugs die Dauer des ersten Durchgangs des in der Warteschlange an dritter Stelle befindlichen Luftfahrzeugs, ausgedrückt als Strecke D31, gleich der von dem am Ende der Warteschlange befindlichen Luftfahrzeug maximal überwindbaren Strecke L4 genommen wird, verringert um die Strecken D1 und D2, die notwendig sind für das Betanken der in der Warteschlange an erster und zweiter Stelle befindlichen Luftfahrzeuge in einem Durchgang:

$$D31=L4-D1-D2$$

wobei die Dauer des zweiten Durchgangs des Betankens des in der Warteschlange an dritter Stelle befindlichen Luftfahrzeugs, ausgedrückt als Strecke D32, gleich der Dauer genommen wird, die notwendig ist, damit die insgesamt übertragene Treibstoffmenge die geforderte Menge erreicht:

$$D32=D3-D31$$

**15.** Verfahren nach Anspruch 13, **dadurch gekennzeichnet, dass** bei Zustandekommen der Wahl der Betankungsreihenfolge D1, D21, D3, D4, D22 mit einer einzigen Aufteilung in zwei Durchgänge des Betankens des in der Warteschlange an zweiter Stelle befindlichen Luftfahrzeugs die Dauer des ersten Durchgangs des Betankens des in der Warteschlange an zweiter Stelle befindlichen Luftfahrzeugs, ausgedrückt als Strecke D21, gleich dem Minimum der von dem am Ende der Warteschlange befindlichen Luftfahrzeug maximal überwindbaren Strecke L4, verringert um die Strecken D1 und D3, die für die Betankungen in einem Durchgang der in der Warteschlange an erster und dritter Stelle befindlichen Luftfahrzeuge notwendig sind, und der von dem in der Warteschlange an dritter Stelle befindlichen Luftfahrzeug maximal überwindbaren Strecke L3 genommen wird, verringert um die Strecke D1, die notwendig ist für das Betanken des am Kopf der Warteschlange befindlichen Luftfahrzeugs in einem Durchgang:

$$D21=\min(L3-D1, L4-D1-D3)$$

wobei die Dauer des zweiten Durchgangs des Betankens des in der Warteschlange an zweiter Stelle befindlichen Luftfahrzeugs, ausgedrückt als Strecke D22, gleich der Dauer genommen wird, die notwendig ist, damit die insgesamt übertragene Treibstoffmenge die geforderte Menge erreicht:

$$D22=D2-D21$$

**16.** Verfahren nach Anspruch 13, **dadurch gekennzeichnet, dass** bei Zustandekommen der Wahl der Betankungsreihenfolge D11, D2, D3, D4, D12 mit einer einzigen Aufteilung in zwei Durchgänge des Betankens des in der Warteschlange an erster Stelle befindlichen Luftfahrzeugs die Dauer des ersten Durchgangs des Betankens des in der Warteschlange an erster Stelle befindlichen Luftfahrzeugs, ausgedrückt als Strecke D11, gleich dem Minimum der von dem in der Warteschlange an zweiter Stelle befindlichen Luftfahrzeug maximal überwindbaren Strecke L2, der von dem am Ende der Warteschlange befindlichen Luftfahrzeug maximal überwindbaren Strecke L4, verringert um die Strecken D2 und D3, die für die Betankungen der in der Warteschlange an zweiter und dritter Stelle befindlichen Luftfahrzeuge in einem Durchgang notwendig sind, und der von dem in der Warteschlange an dritter Stelle befindlichen Luftfahrzeug maximal überwindbaren Strecke L3 genommen wird, verringert um die Strecke D2, die für das Betanken des in der Warteschlange an zweiter Stelle befindlichen Luftfahrzeugs in einem Durchgang notwendig ist:

$$D11=\min(L2,L3-D2, L4-D2-D3)$$

wobei die Dauer des zweiten Durchgangs des Betankens des in der Warteschlange an erster Stelle befindlichen Luftfahrzeugs, ausgedrückt als Strecke D12, gleich der Dauer genommen wird, die notwendig ist, damit die insgesamt übertragene Treibstoffmenge die geforderte Menge erreicht:

$$D12=D1-D11$$

**17.** Verfahren nach Anspruch 13, **dadurch gekennzeichnet, dass** bei Zustandekommen der Wahl der Betankungsreihenfolge D1, D21, D31, D4, D22, D32 mit Aufteilungen in zwei Durchgänge der Betankungen der in der Warteschlange an zweiter und dritter Stelle befindlichen Luftfahrzeuge die Dauern der ersten Durchgänge des Betankens der in der Warteschlange an zweiter und dritter Stelle befindlichen Luftfahrzeuge, ausgedrückt als Strecken D21, D31, gleich der Dauer DMIN genommen werden, iterativ um ein Inkrement INC erhöht, bis zum Erreichen der Grenze der Beachtung der Bedingungen D1+D21<L3 und D1+D21+D31<L4, die von den Autonomien der in der Warteschlange an dritter und vierter Stelle befindlichen Luftfahrzeuge aufgezwungen werden, während die Dauern der zweiten Durchgänge des Betankens der in der Warteschlange an zweiter und dritter Stelle befindlichen Luftfahrzeuge, ausgedrückt als Strecken D22, D32, gleich den Dauern genommen werden, die notwendig sind, damit die insgesamt übertragenen Treibstoffmengen die geforderten Mengen erreichen:

$$D22=D2-D21 \text{ und } D32=D3-D31$$

**18.** Verfahren nach Anspruch 13, **dadurch gekennzeichnet, dass** bei Zustandekommen der Wahl der Betankungsreihenfolge D11, D2, D31, D4, D12, D32 mit Aufteilungen in zwei Durchgänge der Betankungen der in der Warteschlange an erster und dritter Stelle befindlichen Luftfahrzeuge die Dauern der ersten Durchgänge des Betankens der in der Warteschlange an erster und dritter Stelle befindlichen Luftfahrzeuge, ausgedrückt als Strecken D11, D31, gleich der Dauer DMIN genommen werden, iterativ um ein Inkrement INC erhöht, bis zum Erreichen der Grenze der Beachtung der Bedingungen D11<L2, D11+D2<L3 und D11+D2+D31<L4, die von den Autonomien der in der Warteschlange an zweiter, dritter und vierter Stelle befindlichen Luftfahrzeuge aufgezwungen werden, während die Dauern der zweiten Durchgänge des Betankens der in der Warteschlange an erster und dritter Stelle befindlichen Luftfahrzeuge, ausgedrückt als Strecken D12, D32, gleich den Dauern genommen werden, die notwendig sind, damit die insgesamt übertragenen Treibstoffmengen die geforderten Mengen erreichen:

$$D12=D1-D11 \text{ und } D32=D3-D31$$

**19.** Verfahren nach Anspruch 13, **dadurch gekennzeichnet, dass** bei Zustandekommen der Wahl der Betankungsreihenfolge D11, D21, D3, D4, D12, D22 mit Aufteilungen in zwei Durchgänge der Betankungen der in der Warteschlange an erster und zweiter Stelle befindlichen Luftfahrzeuge die Dauern der ersten Durchgänge des Betankens der in der Warteschlange an erster und zweiter Stelle befindlichen Luftfahrzeuge, ausgedrückt als Strecken D11, D21, gleich der Dauer DMIN genommen werden, iterativ um ein Inkrement INC erhöht, bis zum Erreichen der Grenze der Beachtung der Bedingungen D11<L2, D11+D21<L3 und D11+D21+D3<L4, die von den Autonomien der in der Warteschlange an zweiter, dritter und vierter Stelle befindlichen Luftfahrzeuge aufgezwungen werden, während die Dauern der zweiten Durchgänge des Betankens der in der Warteschlange an erster und dritter Stelle befindlichen Luftfahrzeuge, ausgedrückt als Strecken D12, D32, gleich den Dauern genommen werden, die notwendig sind, damit die insgesamt übertragenen Treibstoffmengen die geforderten Mengen erreichen:

$$D12=D1-D11 \text{ und } D22=D2-D21$$

**20.** Verfahren nach Anspruch 13, **dadurch gekennzeichnet, dass** bei Zustandekommen der Wahl der Betankungsreihenfolge D11, D21, D31, D4, D12, D21, D32 mit Aufteilungen in zwei Durchgänge der Betankungen der in der Warteschlange an erster, zweiter und dritter Stelle befindlichen Luftfahrzeuge die Dauern der ersten Durchgänge des Betankens der in der Warteschlange an erster, zweiter und dritter Stelle befindlichen Luftfahrzeuge, ausgedrückt als Strecken D11, D21, D31, gleich der Dauer DMIN genommen werden, iterativ um ein Inkrement INC erhöht, bis zum Erreichen der Grenze der Beachtung der Bedingungen D11<L2, D11+D21<L3 und D11+D21+D31<L4, die von den Autonomien der in der Warteschlange an zweiter, dritter und vierter Stelle befindlichen Luftfahrzeuge aufgezwungen werden, während die Dauern der zweiten Durchgänge des Betankens der in der Warteschlange an erster, zweiter und dritter Stelle befindlichen Luftfahrzeuge, ausgedrückt in Strecken D12, D22, D32, gleich den Dauern genommen werden, die notwendig sind, damit die insgesamt übertragenen Treibstoffmengen die geforderten Mengen erreichen:

$$D12=D1-D11,\ D22=D2-D21 \text{ und } D32=D3-D31$$

## Claims

**1.** Method of managing the in-flight refuelling of a squadron (1) of n aircraft A1, ..., An from the same refuelling hose of a tanker (2), making it possible to generate a refuelling sequence on the basis of taking into account a refuelling rendezvous point P, the number n of aircraft in the squadron (1), the amounts of fuel Q1,..., Qn demanded by the aircraft A1,..., An of the squadron (1) and the maximum distances L1, ..., Ln that can be covered by each aircraft in the squadron (1) in waiting for the start of refuelling, these maximum distances L1,..., Ln corresponding to the distances separating the refuelling rendezvous point P, over the route followed by the tanker (2), from the limiting points that can be reached by the various aircraft in the squadron (1) without refuelling and without them drawing on their fuel reserves, said method being **characterized in that** it comprises the following steps:

- of initially taking an arbitrary refuelling sequence defined by the queuing of the aircraft in the squadron (1) in an arbitrary order A1, ..., An and a single pass by each aircraft in the squadron (1) to the refuelling hose;
- of testing the viability of the refuelling sequence adopted, consisting in expressing, as distances D1,..., Dn to be flown by the tanker (2), the times needed to deliver to the aircraft in the squadron (1) the planned amounts of fuel during their passes to the refuelling hose and in verifying, by going down the queue, that each aircraft other than the one at the front of the queue A2,..., An will start its refuelling within the deadlines, that is to say before the tanker (2) has flown a distance greater than the maximum distance L2,..., Ln that can be covered by the aircraft in question;
- when there is no finding that an aircraft will start its refuelling beyond the deadline, of accepting the viability of the refuelling sequence tested and of adopting it;
- when there is a finding that an aircraft will start its refuelling beyond the deadline, of modifying the refuelling sequence tested in order to shorten the waiting time by this aircraft and of trying to refuel it within the deadlines, the modification in the sequence consisting in dividing, into two passes, the refuelling operation or operations of one or more aircraft that precede the aircraft in question in the queue, a first shortened pass to the refuelling hose allowing an aircraft to receive a minimum amount of fuel, increasing its endurance sufficiently for it to be able to move to the end of the queue and to wait for a second pass to the refuelling hose for the remainder of the fuel without drawing on its fuel reserve, the one or more aircraft whose refuelling is divided into two being chosen so as to minimize the number of passes to the refuelling hose, the choice firstly depending on the aircraft, if there is one, that is placed ahead in the queue and the dividing of the refuelling of which into two passes to the refuelling hose makes it possible to approach as best as possible, by an upper value, the desired time saving, and then on the two aircraft, if they exist, placed ahead in the queue, the divisions of the refuelling of which make it possible to approach as best as possible, by an upper value, the desired time saving, and so on, the absence of a solution in the choice of the aircraft for divided refuelling resulting in a finding that it is impossible to refuel the entire squadron, whereas the presence of a solution leads to a modified refuelling sequence proposal; and
- of taking any modified refuelling sequence proposal and testing its viability by restarting at the second step of the method.

**2.** Method according to Claim 1, **characterized in that** it includes an additional step in the case of a negative viability test of the arbitrary refuelling sequence initially adopted, this step consisting in replacing said arbitrary refuelling sequence with a refuelling sequence referred to as a nominal refuelling sequence defined by an order in the queue corresponding to decreasing amounts of fuel demanded and by a single pass of each aircraft in the squadron (1) to the refuelling hose, the first aircraft in the queue being that requiring the largest amount of fuel.

**3.** Method according to Claim 1, **characterized in that** it includes an additional step in the case of a negative viability test of the arbitrary refuelling sequence initially adopted, this step consisting in replacing said arbitrary refuelling sequence with a refuelling sequence defined by an order in the queue corresponding to increasing maximum distances L1, L2..., Ln that can be covered and by a single pass by each aircraft in the squadron (1) to the refuelling hose, the aircraft placed at the front of the queue being that having the shortest maximum distance that can be covered.

4. Method according to Claim 1, **characterized in that**, should a viability test of a refuelling sequence be negative owing to the finding that one aircraft in the squadron (1) will start its refuelling beyond the deadline, the choice of the one or more aircraft, placed ahead in the queue, the refuelling of which is divided, results from systematic virtual tests carried out by going up the queue taking into consideration one aircraft, then two aircraft, including that one giving the greatest time saving, then three aircraft, including the two providing the greatest time saving, and so on.

5. Method according to Claim 1, **characterized in that** the duration of a first shortened pass to the refuelling hose of a divided refuelling operation is set to the same value DMIN for all the aircraft in the squadron (1), which value is progressively increased, once the refuelling sequence has satisfied the viability test, until reaching the endurance limit for one of the aircraft in the squadron (1).

6. Method according to Claim 1, **characterized in that** the choice of the aircraft in the squadron (1) whose refuelling is divided results from checking that a succession of inequality relationships between the flight distances D1, ..., Dn needed by the tanker (2), in order to deliver the required amounts of fuel during each pass of the aircraft in the squadron (1) to the refuelling hose and the maximum distances L1, L2,..., Ln that can be covered by each aircraft in the squadron (1), is met.

7. Method according to Claim 1, applied to a squadron of two aircraft, **characterized in that** it consists:

- in accepting an arbitrary order in the queue for the two aircraft in the squadron;
- in checking whether the maximum distance L2that can be covered by the aircraft in second position in the refuelling queue is greater than the duration, expressed as a distance D1 that can be covered, necessary for refuelling the aircraft placed in first position in the queue in one pass to the refuelling hose;
- if this is the case, since the condition D1 < L2 is satisfied, in adopting the refuelling sequence D1, D2 with only one pass per aircraft to be refuelled; and
- if this is not the case, since the condition D1 < L2 is not satisfied, in checking that the maximum distance L2 that can be covered by the aircraft placed second in the queue is greater than the minimum duration, expressed as the distance DMIN that can be covered, of a pass to the refuelling hose;
- if this is not the case, since the condition DMIN < L2 is not satisfied, in signaling the impossibility of refuelling with the adopted order in the queue; and
- if this is the case, since the condition D1 < L2 is satisfied, in adopting the refuelling sequence D11, D2, D12 with the refuelling of the aircraft at the front of the queue being divided into two passes.

8. Method according to Claim 7, **characterized in that** the duration of the first refuelling pass D11 by the aircraft in first position in the queue is taken as equal to the maximum distance L2 that can be covered by the aircraft placed in second position in the queue.

9. Method according to Claim 1, applied to a squadron of three aircraft, **characterized in that** it consists:

- in accepting an order in the refuelling queue for the three aircraft in the squadron corresponding to decreasing amounts of fuel demanded;
- in checking whether the maximum distances L2 and L3 that can be covered by the aircraft placed in the second and third positions in the queue are greater than the durations D1, D1+D2, expressed as distances that can be covered, of the refuelling in one pass to the refuelling hose of the one or more aircraft that is or are placed ahead in the queue;
- if this is the case, since the conditions D1 < L2 and D1+D2 < L3 are satisfied, in adopting the refuelling sequence D1, D2, D3 with only one pass to the refuelling hose per aircraft to be refuelled;
- if this is not the case, since at least one of the conditions D1 < L2 or D1+D2 < L3 is not satisfied, in checking that the maximum distances L2, L3 that can be covered by the aircraft not occupying the front of the queue are greater than the minimum durations, expressed as the distance DMIN that can be covered, of a pass to the refuelling hose by each of the aircraft placed ahead in the queue;
- if this is not the case, since one of the conditions DMIN < L2 or 2DMIN < L3 is not satisfied, in signaling the impossibility of refuelling with the adopted order in the queue;
- if this is the case, since both the conditions DMIN < L2 and 2DMIN < L3 are satisfied, in searching for the refuelling operation(s) the dividing of which leads to a refuelling sequence making it possible to commence the refuelling of all the aircraft in the squadron before they have flown their maximum distances that can be covered while still having only the minimum number of passes to the refuelling hose;

said search for the refuelling operation(s) to be divided in order to be able to commence the refuelling of the aircraft before they have flown their maximum distances that can be covered comprising the following successive steps:

- checking whether the conditions $D1 < L2$ and $D1+DMIN < L3$ are fulfilled;
- if this is the case, adopting the refuelling sequence D1, D21, D3, D22 with only the refuelling of the aircraft placed in second position in the queue being divided into two passes;
- if this is not the case, since one of the conditions $D1 < L2$ or $D2+DMIN < L3$ is not satisfied, checking whether the condition $D2+DMIN < L3$ is fulfilled;
- if the condition $D2+DMIN < L3$ is fulfilled, adopting the refuelling sequence D11, D2, D3, D12 with only the refuelling of the aircraft at the front of the queue being divided into two passes; and
- if the condition $D2+DMIN < L3$ is not fulfilled, adopting the refuelling sequence D11, D21, D3, D12, D22 with the refuelling of the aircraft placed in first and second positions in the queue being divided into two passes.

**10.** Method according to Claim 9, **characterized in that**, upon completing the selection of the refuelling sequence D1, D21, D3, D22 with only the refuelling of the aircraft in second position in the queue being divided into two passes, the duration of the first refuelling pass by the aircraft placed in second position in the queue, expressed as the distance D21, is taken as equal to the maximum distance L3 that can be covered by the aircraft placed at the back of the queue, reduced by the distance D1 necessary for refuelling the aircraft placed at the front of the queue in one pass:

$$D21=L3-D1$$

the duration of the second refuelling pass by the aircraft placed in second position in the queue, expressed as the distance D22, being taken as equal to the duration necessary for the amount of fuel transferred in total to reach the amount demanded:

$$D22=D2-D21.$$

**11.** Method according to Claim 9, **characterized in that**, upon completing the selection of the refuelling sequence D11, D2, D3, D12 with only the refuelling of the aircraft in first position in the queue being divided into two passes, the duration of the first refuelling pass by the aircraft placed in first position in the queue, expressed as the distance D11, is taken as equal to the minimum of the maximum distance L2 that can be covered by the aircraft placed in second position in the queue and of the maximum distance L3 that can be covered by the aircraft placed in third position in the queue, reduced by the distance D2 necessary for refuelling the aircraft placed in second position in the queue in one pass:

$$D11 = \min(L2, L3-D2)$$

the duration of the second refuelling pass by the aircraft placed in the first position in the queue, expressed as the distance D12, being taken as equal to the duration necessary for the amount of fuel transferred in total to reach the amount demanded:

$$D12 = D1-D11.$$

**12.** Method according to Claim 9, **characterized in that**, upon completing the selection of the refuelling sequence D11, D21, D3, D12, D22 with the refuelling of the aircraft placed in the first and second positions in the queue being divided into two passes, the durations of the first refuelling passes by the aircraft placed in the first and second positions in the queue, expressed as the distances D11, D21, are taken as equal to the duration DMIN increased iteratively by an increment INC until, as a limit, the situation is reached in which the conditions $D11 < L2$ and $D11+D21 < L3$ imposed by the endurances of the aircraft placed in the second and third positions in the queue are met, the durations of the second refuelling passes by the aircraft placed in the first and second positions in the queue, expressed as distances D12, D22 being taken as equal to the durations necessary for the amounts of fuel transferred in total to reach the amounts demanded:

$$D12 = D1-D11 \text{ and } D22 = D2-D21.$$

**13.** Method according to Claim 1, applied to a squadron of four aircraft, **characterized in that** it consists:

- in accepting an order in the refuelling queue for the four aircraft in the squadron corresponding to decreasing amounts of fuel demanded;
- in checking whether the maximum distances L2, L3 and L4 that can be covered by the aircraft placed in the second, third and fourth positions in the queue are greater than the durations D1, D1+D2, D1+D2+D3 expressed as distances that can be covered, of the refuelling in one pass to the refuelling hose of the one or more aircraft that is or are placed ahead in the queue;
- if this is the case, since the conditions D1 < L2, D1+D2 < L3 and D1+D2+D3 < L4 are satisfied, in adopting the refuelling sequence D1, D2, D3, D4 with only one pass per aircraft to be refuelled;
- if this is not the case, since at least one of the conditions D1 < L2 or D1+D2 < L3 or D1+D2+D3 < L4 is not satisfied, in checking that the maximum distances L2, L3, L4 that can be covered by the aircraft not occupying the front of the queue are greater than the minimum durations, expressed as the distance DMIN that can be covered, of a pass to the refuelling hose by each of the aircraft placed ahead in the queue;
- if this is not the case, since one of the conditions DMIN < L2 or 2DMIN < L3 or 3DMIN < L4 is not satisfied, in signaling the impossibility of refuelling with the adopted order in the queue;
- if this is the case, since the three conditions DMIN < L2, 2DMIN < L3 and 3DMIN are satisfied, in searching for the refuelling operation(s) the dividing of which leads to a refuelling sequence making it possible to commence the refuelling of all the aircraft in the squadron before they have flown their maximum distances that can be covered while still having only the minimum number of passes to the refuelling hose;
  said search for the refuelling operation(s) to be divided in order to be able to commence the refuelling of the aircraft before they have flown their maximum distances that can be covered comprising the following successive steps:

  - checking whether the conditions D1 < L2 and D1+D2 < L3 and D1+D2+DMIN < L4 are fulfilled;
  - if this is the case, adopting the refuelling sequence D1, D2, D31, D4, D32 with only the refuelling of the aircraft placed in third position in the queue being divided into two passes;
  - if this is not the case, since one of the conditions D1 < L2 or D1+D2 < L3 or D1+D2+Dmin < L4 is not fulfilled, checking whether the conditions D1 < L2, D1+DMIN < L3 and D1+D3+DMIN < L4 are fulfilled;
  - if this is the case, adopting the refuelling sequence D1, D21, D3, D4, D22 with only the refuelling of the aircraft placed in second position in the queue being divided into two passes;
  - if this is not the case, since one of the conditions D1 < L2 or D1+DMIN < L3 or D1+D3+DMIN < L4 is not fulfilled, checking whether the conditions D2+DMIN < L3 and D2+D3+DMIN < L4 are fulfilled;
  - if this is the case, adopting the refuelling sequence D11, D2, D3, D12 with only the refuelling of the aircraft placed in first position in the queue being divided into two passes;
  - if this is not the case, since one of the conditions D2+DMIN < L3 or D2+D3+DMIN < L4 is not fulfilled, checking whether the conditions D1 < L2, D1+DMIN < L3 and D1+2DMIN < L4 are fulfilled;
  - if this is the case, adopting the refuelling sequence D1, D21, D31, D4, D22, D32 with the refuelling of the aircraft placed in second and third positions in the queue being divided into two passes;
  - if this is not the case, since one of the conditions D1 < L2 or D1+DMIN < L3 or D1+2DMIN < L4 is not fulfilled, checking whether the conditions D2+DMIN < L3 and D2+2DMIN < L4 are fulfilled;
  - if this is the case, adopting the refuelling sequence D11, D2, D31, D4, D12, D32 with the refuelling of the aircraft placed in first and third positions in the queue being divided into two passes;
  - if this is not the case, since one of the conditions D2+DMIN < L3 or D2+2DMIN < L4 is not fulfilled, checking whether the condition D3+2DMIN < L4 is fulfilled;
  - if the condition D3+2DMIN < L4 is fulfilled, adopting the refuelling sequence D11, D21, D3, D4, D12, D22 with the refuelling of the aircraft placed in first and second positions in the queue being divided into two passes; and
  - if the condition D3+2DMIN < L4 is not fulfilled, adopting the refuelling sequence D11, D21, D31, D4, D12, D22, D31 with the refuelling of the aircraft placed in first, second and third positions in the queue being divided into two passes.

**14.** Method according to Claim 13, **characterized in that**, upon completing the selection of the refuelling sequence D1, D2, D31, D4, D32 with only the refuelling of the aircraft in third position in the queue being divided into two passes, the duration of the first refuelling pass by the aircraft placed in third position in the queue, expressed as the distance D31, is taken as equal to the maximum distance L4 that can be covered by the aircraft placed at the back of the queue, reduced by the distances D1 and D2 necessary for refuelling the aircraft placed in first and second positions in the queue in one pass:

$$D31 = L4-D1-D2$$

the duration of the second refuelling pass by the aircraft placed in third position in the queue, expressed as the distance D32, being taken as equal to the duration necessary for the amount of fuel transferred in total to reach the amount demanded:

$$D32 = D3-D31.$$

**15.** Method according to Claim 13, **characterized in that**, upon completing the selection of the refuelling sequence D1, D21, D3, D4, D22 with only the refuelling of the aircraft in second position in the queue being divided into two passes, the duration of the first refuelling pass by the aircraft placed in second position in the queue, expressed as the distance D21, is taken as equal to the minimum of the maximum distance L4 that can be covered by the aircraft placed at the back of the queue, reduced by the distances D1 and D3 necessary for refuelling the aircraft placed in first and third positions in the queue in one pass, and of the maximum distance L3 that can be covered by the aircraft placed in third position in the queue, reduced by the distance D1 necessary for refuelling the aircraft placed at the front of the queue in one pass:

$$D21 = \min(L3-D1, L4-D1-D3)$$

the duration of the second refuelling pass by the aircraft placed in second position in the queue, expressed as the distance D22, being taken as equal to the duration necessary for the amount of fuel transferred in total to reach the amount demanded:

$$D22 = D2-D21.$$

**16.** Method according to Claim 13, **characterized in that**, upon completing the selection of the refuelling sequence D11, D2, D3, D4, D12 with only the refuelling of the aircraft in first position in the queue being divided into two passes, the duration of the first refuelling pass by the aircraft placed in first position in the queue, expressed as the distance D11, is taken as equal to the minimum of the maximum distance L2 that can be covered by the aircraft placed in second position in the queue, of the maximum distance L4 that can be covered by the aircraft placed at the front of the queue, reduced by the distances D2 and D3 necessary for refuelling the aircraft placed in second and third positions in the queue in one pass, and of the maximum distance L3 that can be covered by the aircraft placed in third position in the queue, reduced by the distance D2 necessary for refuelling the aircraft placed in second position in the queue in one pass:

$$D11 = \min(L2, L3-D2, L4-D2-D3)$$

the duration of the second refuelling pass by the aircraft placed in first position in the queue, expressed as the distance D12, being taken as equal to the duration necessary for the amount of fuel transferred in total to reach the amount demanded:

$$D12 = D1-D11.$$

**17.** Method according to Claim 13, **characterized in that**, upon completing the selection of the refuelling sequence D1, D21, D31, D4, D22, D32 with the refuelling of the aircraft in second and third positions in the queue being divided into two passes, the durations of the first refuelling passes by the aircraft placed in second and third positions in the queue, expressed as the distances D21, D31, are taken as equal to the duration DMIN increased iteratively by an increment INC until, as a limit, the situation is reached in which the conditions D1+D21 < L3 and D1+D21+D31 < L4 imposed by the endurances of the aircraft placed in third and fourth positions in the queue are met, the durations of the second refuelling passes by the aircraft placed in second and third positions in the queue, expressed as distances D22, D32, being taken as equal to the durations necessary for the amounts of fuel transferred in total to reach the amounts demanded:

D22 = D2-D21 and D32 = D3-D31.

**18.** Method according to Claim 13, **characterized in that**, upon completing the selection of the refuelling sequence D11, D2, D31, D4, D12, D32 with the refuelling of the aircraft placed in first and third positions in the queue being divided into two passes, the durations of the first refuelling passes by the aircraft placed in first and third positions in the queue, expressed as the distances D11, D31, are taken as equal to the duration DMIN increased iteratively by an increment INC until, as a limit, the situation is reached in which the conditions D11 < L2, D11+D2 < L3 and D11+D2+D31 < L4 imposed by the endurances of the aircraft placed in the second, third and fourth positions in the queue are met, the durations of the second refuelling passes by the aircraft placed in first and third positions in the queue, expressed as the distances D12, D32, being taken as equal to the durations necessary for the amounts of fuel transferred in total to reach the amounts demanded:

D12 = D1-D11 and D32 = D3-D31.

**19.** Method according to Claim 13, **characterized in that**, upon completing the selection of the refuelling sequence D11, D21, D3, D4, D12, D22 with the refuelling of the aircraft placed in first and second positions in the queue being divided into two passes, the durations of the first refuelling passes by the aircraft placed in first and second positions in the queue, expressed as the distances D11, D21, are taken as equal to the duration DMIN increased iteratively by an increment INC until, as a limit, the situation is reached in which the conditions D11 < L2, D11+D21 < L3 and D11+D21+D3 < L4 imposed by the endurances of the aircraft placed in second, third and fourth positions in the queue are met, the durations of the second refuelling passes by the aircraft placed in the first and third positions in the queue, expressed as the distances D12, D32, being taken as equal to the durations necessary for the amounts of fuel transferred in total to reach the amounts demanded:

D12 = D1-D11 and D22 = D2-D21.

**20.** Method according to Claim 13, **characterized in that**, upon completing the selection of the refuelling sequence D11, D21, D31, D4, D12, D32 with the refuelling of the aircraft placed in the first, second and third positions in the queue being divided into two passes, the durations of the first refuelling passes by the aircraft placed in the first, second and third positions in the queue, expressed as the distances D11, D21, D31, are taken as equal to the duration DMIN increased iteratively by an increment INC until, as a limit, the situation is reached in which the conditions D11 < L2, D11+D21 < L3 and D11+D21+D31 < L4 imposed by the endurances of the aircraft placed in the second, third and fourth positions in the queue are met, the durations of the second refuelling passes by the aircraft placed in the first, second and third positions in the queue, expressed as the distances D12, D22, D32, being taken as equal to the durations necessary for the amounts of fuel transferred in total to reach the amounts demanded:

D12 = D1-D11, D22 = D2-D21 and D32 = D3-D31.

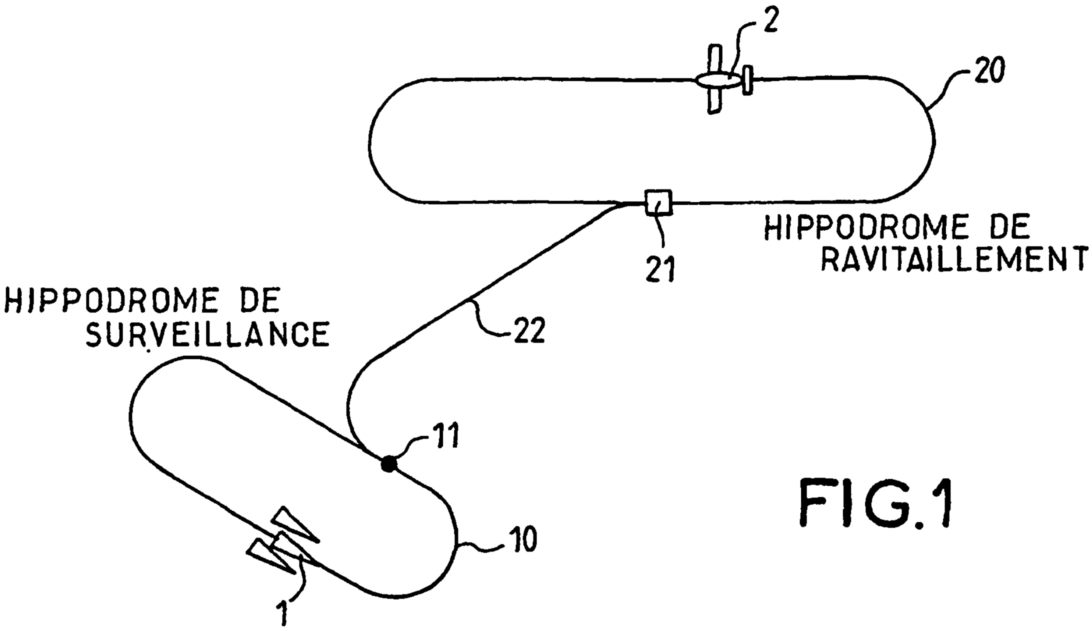


FIG.1

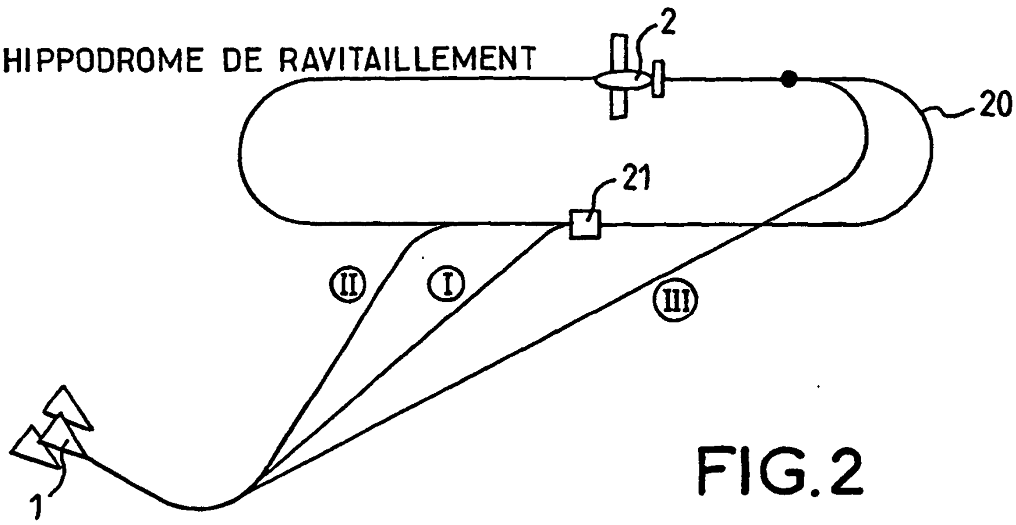


FIG.2

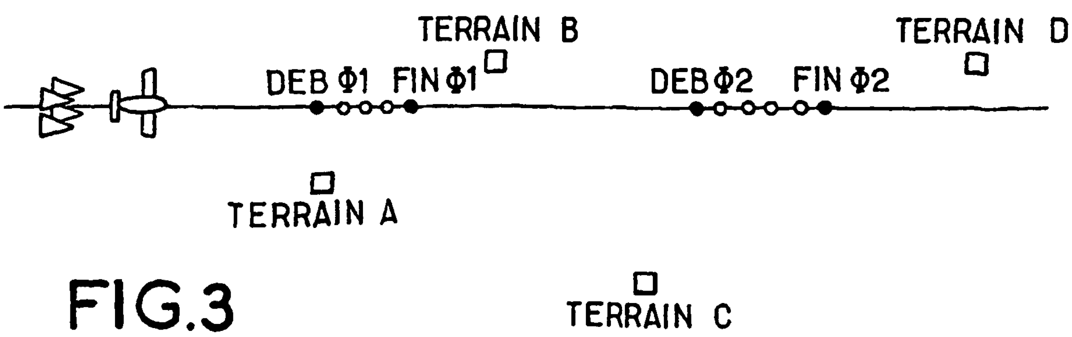


FIG.3

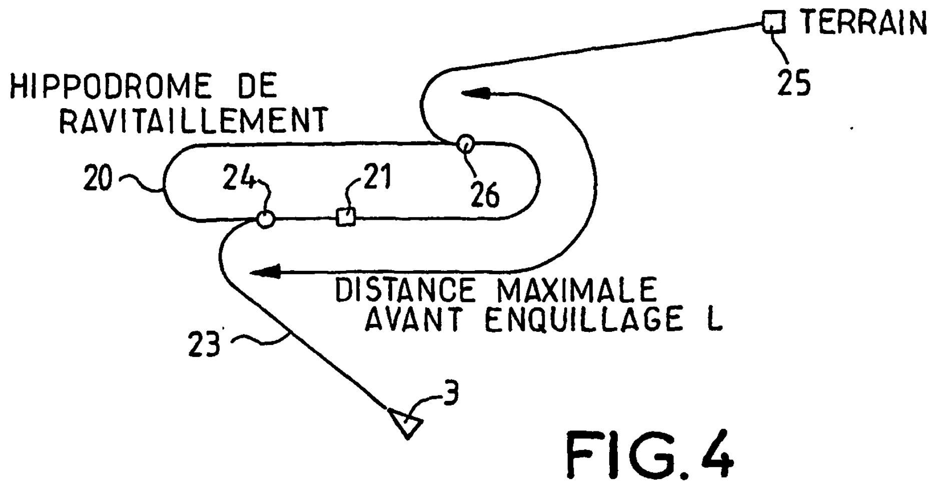


FIG. 4

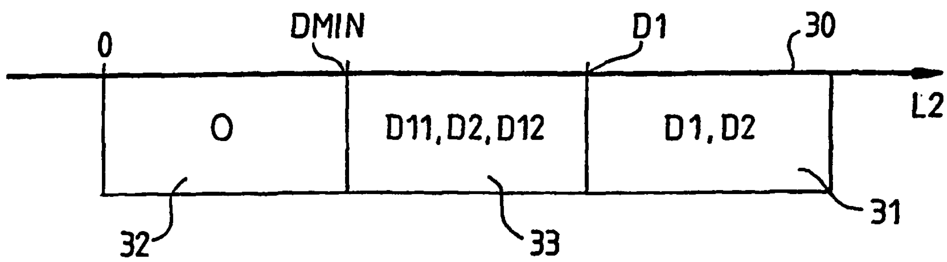


FIG. 5

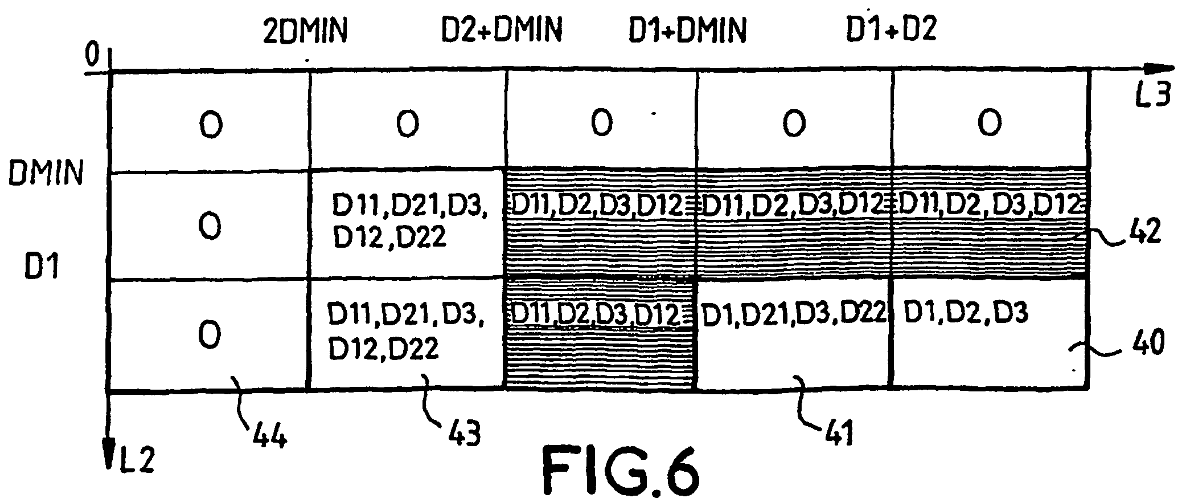


FIG. 6

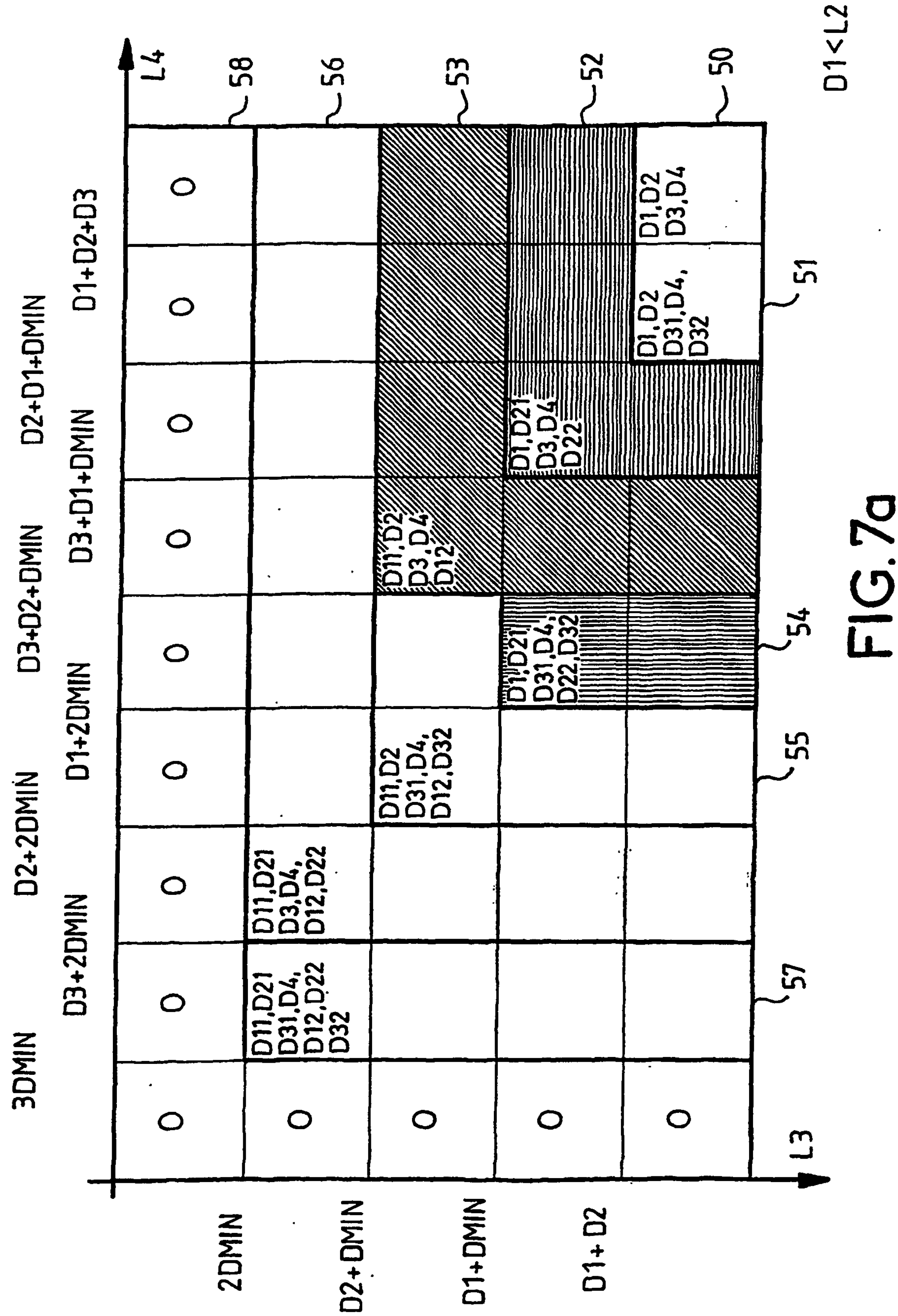
L4
L3
D1<L2
3DMIN
D3+2DMIN
D2+2DMIN
D1+2DMIN
D3+D2+2DMIN
D3+D1+DMIN
D2+D1+DMIN
D1+D2+D3
2DMIN
D2+DMIN
D1+DMIN
D1+ D2
50
51
52
53
54
55
56
57
58
D11,D21 D31,D4, D12,D22 D32
D11,D21 D3,D4, D12,D22
D11,D2 D31,D4, D12,D32
D1,D21 D31,D4, D22,D32
D11,D2 D3,D4 D12
D1,D21 D3,D4 D22
D1,D2 D31,D4, D32
D1,D2 D3,D4

FIG. 7a

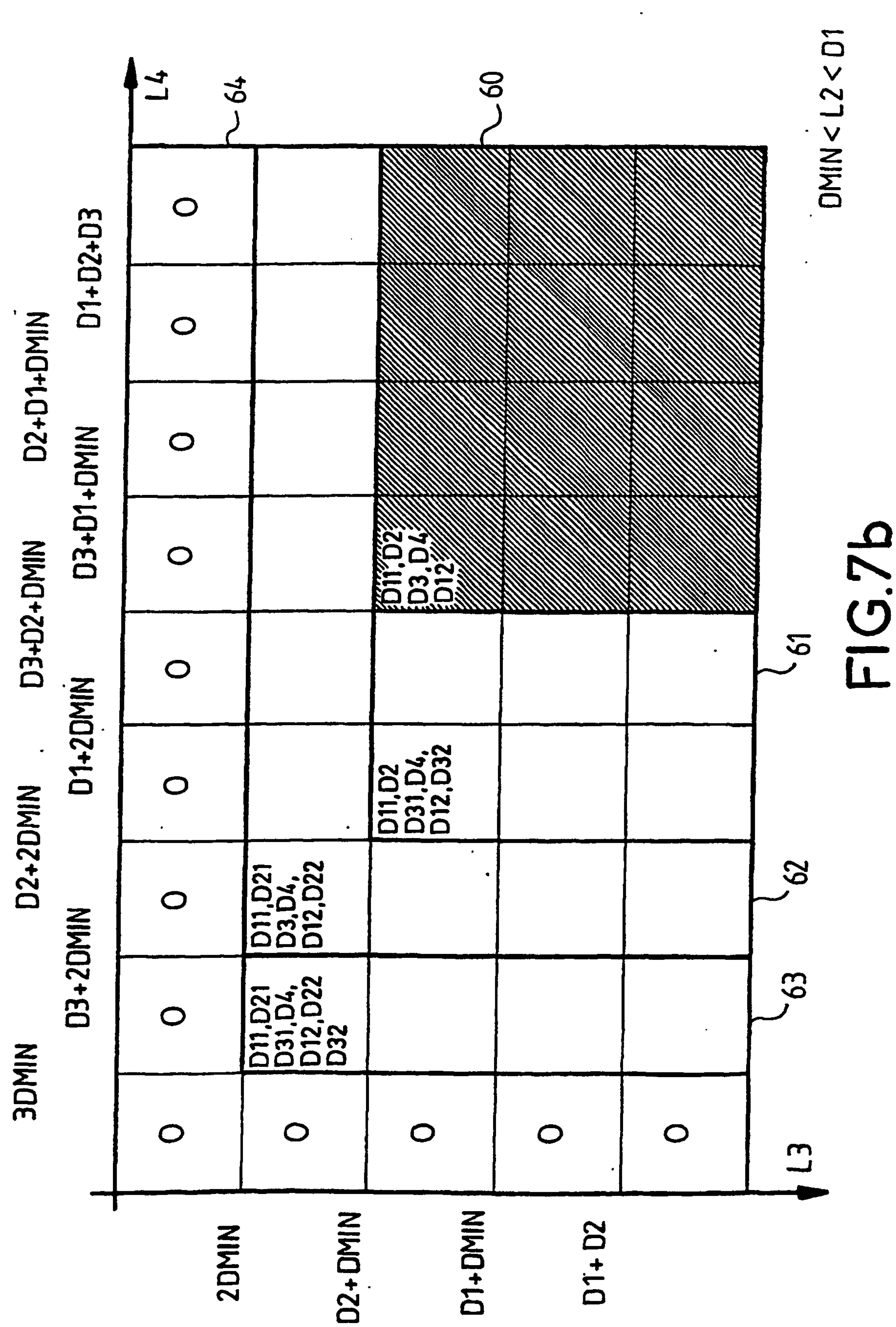
L4
L3
64
60
61
62
63
DMIN<L2<D1
3DMIN
D3+2DMIN
D2+2DMIN
D1+2DMIN
D3+D2+DMIN
D3+D1+DMIN
D2+D1+DMIN
D1+D2+D3
2DMIN
D2+DMIN
D1+DMIN
D1+D2
D11,D21 D31,D4, D12,D22 D32
D11,D21 D3,D4, D12,D22
D11,D2 D31,D4, D12,D32
D11,D2 D3,D4 D12

FIG.7b